(19) Europäisches Patentamt / European Patent Office / Office européen des brevets

(11) **EP 4 397 554 B1**

(12) **EUROPEAN PATENT SPECIFICATION**

(45) Date of publication and mention
of the grant of the patent:
**03.09.2025   Bulletin 2025/36**

(21) Application number: **23213250.6**

(22) Date of filing: **30.11.2023**

(51) International Patent Classification (IPC):
**B60W 30/00** (2006.01)    **B60W 30/09** (2012.01)
**B60W 30/095** (2012.01)    **B60W 60/00** (2020.01)
**G08G 1/16** (2006.01)

(52) Cooperative Patent Classification (CPC):
**B60W 30/09; B60W 30/095; B60W 60/0015;**
B60W 2520/10; B60W 2530/201; B60W 2554/4023;
B60W 2554/4029; B60W 2554/4042;
B60W 2554/801; B60W 2554/802; Y02T 10/72

(54) **VEHICLE SAFETY CONTROL METHOD AND APPARATUS, ELECTRONIC DEVICE, AND STORAGE MEDIUM**

VERFAHREN UND VORRICHTUNG ZUR FAHRZEUGSICHERHEITSSTEUERUNG, ELEKTRONISCHE VORRICHTUNG UND SPEICHERMEDIUM

PROCÉDÉ ET APPAREIL DE COMMANDE DE SÉCURITÉ DE VÉHICULE, DISPOSITIF ÉLECTRONIQUE ET SUPPORT D'INFORMATIONS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **03.01.2023   CN 202310002924**

(43) Date of publication of application:
**10.07.2024   Bulletin 2024/28**

(73) Proprietor: **Chongqing Changan Automobile Co.,
Ltd.**
**Chongqing 400023 (CN)**

(72) Inventors:
• **Yang, Dongfang**
**Chongqing 400023 (CN)**
• **Ding, Rongqi**
**Chongqing 400023 (CN)**
• **Qiu, Lihong**
**Chongqing 400023 (CN)**
• **Lian, Jing**
**Chongqing 400023 (CN)**

(74) Representative: **Patentanwaltskanzlei
Matschnig & Forsthuber OG
Biberstraße 22
Postfach 36
1010 Wien (AT)**

(56) References cited:
CN-A- 114 906 136     US-A1- 2016 327 953
US-A1- 2019 283 671     US-A1- 2022 161 787

## Description

### Field of the Invention

The present invention relates to the technical field of active safety for automatic driving, and in particular, to a vehicle safety control method and apparatus, an electronic device, and a storage medium.

### Background of the Invention

Automatic driving technology has become one of the most popular research topics in the world, and greatly improves traffic travel efficiency and driving safety. Because of the limitation of sensing ranges of sensors and the blocking of vehicles in a complex traffic scene, especially the blocking of pedestrians by large buses in a bus stop scene, automatic driving vehicles cannot sense and predict the pedestrians in a driving blind spot in time. Thus, sudden situations cannot be effectively handled, thereby causing serious traffic accidents. Therefore, under the existing technical system, it is a feasible technical means to achieve safe and stable driving by actively avoiding such sudden dangerous situations as "sudden appearance from a blind spot" at the bus stop scene.

In the related art, most of blind spot early warning systems need to judge whether traffic participants will crash with a host vehicle in the future by combining observation history and using a "track-and-predict" pattern.

However, this judgment pattern cannot obtain a pedestrian trajectory scene in advance, such as a bus stop. Because of a large blocking range, historical states of pedestrians cannot be collected in most cases, whereby the automatic driving vehicle cannot make an effective prediction and determination accordingly. Therefore, in this case, it is very likely to cause dangerous situations as "sudden appearance from a blind spot", resulting in accidents.

US 2022/0161787 A1 relates to a risk avoidance control for reducing the risk of collision with an object in front of the vehicle and provides a technique capable of suppressing a sense of discomfort with respect to the risk avoidance control based on the risk potential field.

### Summary of the Invention

The present invention provides a vehicle safety control method and apparatus, an electronic device, and a storage medium, so as to solve the problem of traffic accidents caused by the fact that a vehicle cannot make an effective prediction and determination as an early warning system in the related art cannot obtain a pedestrian trajectory scene in advance.

According to embodiments of a first aspect of the present invention, a vehicle safety control method is provided, including the following steps: acquiring first state information of a current vehicle, second state information of a target vehicle, and a longitudinal relative distance and a lateral relative distance between the current vehicle and the target vehicle, and determining a blind spot position and a crash region of the current vehicle according to the first state information and the second state information; calculating a safety distance between the current vehicle and the crash region according to the first state information and the second state information, and determining a current blind spot grade of the current vehicle according to the longitudinal relative distance, the lateral relative distance, and the safety distance; and generating, based on a predetermined trajectory generation model, a pedestrian prediction trajectory corresponding to the current blind spot grade, and inputting the pedestrian prediction trajectory corresponding to the current blind spot grade to a trajectory planning module of the current vehicle, so as to control, according to the pedestrian prediction trajectory corresponding to the current blind spot grade, the current vehicle to execute a deceleration action and/or an avoidance action.

According to the foregoing technical means, state information of a current vehicle and a target vehicle is jointly considered, and a blind spot grading response is made, thus effectively improving the activeness of current vehicle planning in a target vehicle scene and ensuring the driving safety.

Further, in one embodiment of the present invention, the acquiring first state information of a current vehicle and second state information of a target vehicle includes: acquiring a current velocity and a current planned trajectory of the current vehicle, and obtaining the first state information according to the current velocity and/or the current planned trajectory of the current vehicle; and acquiring a current velocity, a current acceleration, a length, and a width of the target vehicle, and obtaining the second state information according to the current velocity, the current acceleration, the length, and/or the width of the target vehicle.

According to the foregoing technical means, relevant driving parameters of a current vehicle and a target vehicle are acquired, thus improving driving state information during driving of the current vehicle and the target vehicle.

Further, in one embodiment of the present invention, the determining a blind spot position and a crash region of the current vehicle according to the first state information and the second state information includes: taking a projection position of a leading edge center of a vehicle body of the target vehicle on a predetermined map as a blind spot position, and projecting the blind spot position to the current planned trajectory along a normal direction of a road; taking, if a projection point is located on the current planned trajectory, the projection point as a crash point, otherwise, taking a point on a center line of a lane where the target vehicle is currently located as the crash point; and obtaining the crash region by taking the crash point as a center and the width of the target vehicle as a diameter.

According to the foregoing technical means, a blind spot position and a crash region of a current vehicle are determined to perform corresponding blind spot and crash processing, thus improving the driving safety of a user.

Further, in one embodiment of the present invention, the calculating a safety distance between the current vehicle and the crash region according to the first state information and the second state information includes: calculating the safety distance between the current vehicle and the crash region based on a first safety distance formula when the target vehicle is in a stationary state, the first safety distance formula being:

$$D_s = v_{ego} * t_s + \frac{v_{ego}^2}{2*a_{ego}};$$

calculating the safety distance between the current vehicle and the crash region based on a second safety distance formula when the target vehicle is in a moving state, the second safety distance formula being:

$$D_s = v_{ego} * t_s + \frac{v_{ego}^2}{2*a_{ego}} + \frac{v_{bus}^2}{2*a_{bus}},$$

where $D_s$ is the safety distance between the current vehicle and the crash region, $v_{ego}$ is the velocity of the current vehicle, $t_s$ is a response time, $a_{ego}$ is a deceleration estimate of the current vehicle, $v_{bus}$ is the current velocity of the target vehicle, and $a_{bus}$ is the current acceleration of the target vehicle.

According to the foregoing technical means, a crash safety distance is determined, thus improving the activeness of vehicle driving planning and ensuring the driving safety.

Further, in one embodiment of the present invention, the determining a current blind spot grade of the current vehicle according to the longitudinal relative distance, the lateral relative distance, and the safety distance includes: determining, when the safety distance is greater than the longitudinal relative distance and the longitudinal relative distance is greater than a first predetermined value, the current blind spot grade as a caution driving grade; determining, when the safety distance is less than the longitudinal relative distance, the current blind spot grade as an attention driving grade; and determining, when the longitudinal relative distance is less than or equal to the first predetermined value or the lateral relative distance is greater than a second predetermined value, the current blind spot grade as a safety driving grade.

According to the foregoing technical means, a blind spot grade of a current vehicle is planned, thus improving the activeness of vehicle driving planning and ensuring the driving safety.

Further, in one embodiment of the present invention, the generating, based on a predetermined trajectory generation model, a pedestrian prediction trajectory corresponding to the current blind spot grade includes: taking the blind spot position as a start point of the pedestrian prediction trajectory when the current blind spot grade is a caution driving grade; translating the crash region toward the target vehicle along a normal direction of a road according to a width of the current vehicle, sampling the translated crash region according to a first predetermined sampling rule, and taking a sampling point as an end point of the pedestrian prediction trajectory; and generating, based on a predetermined third-order polynomial trajectory generation model, a pedestrian prediction trajectory corresponding to the caution driving grade according to the start point of the pedestrian prediction trajectory, the end point of the pedestrian prediction trajectory, a velocity of a pedestrian at the start point of the pedestrian prediction trajectory, and a velocity of the pedestrian at the end point of the pedestrian prediction trajectory.

According to the foregoing technical means, pedestrian trajectories corresponding to different blind spot grades are predicted, thus improving the safety driving performance of a user in a blind spot direction.

Further, in one embodiment of the present invention, the generating, based on a predetermined trajectory generation model, a pedestrian prediction trajectory corresponding to the current blind spot grade includes: taking the blind spot position as a start point of the pedestrian prediction trajectory when the current blind spot grade is an attention driving grade; sampling the crash region according to a second predetermined sampling rule, and taking a sampling point as an end point of the pedestrian prediction trajectory; and generating, based on a predetermined second-order polynomial trajectory generation model, a pedestrian prediction trajectory corresponding to the attention driving grade according to the start point of the pedestrian prediction trajectory and the end point of the pedestrian prediction trajectory.

According to the foregoing technical means, pedestrian trajectories corresponding to different blind spot grades are predicted, thus improving the safety driving performance of a user in a blind spot direction.

Further, in one embodiment of the present invention, the generating, based on a predetermined trajectory generation model, a pedestrian prediction trajectory corresponding to the current blind spot grade includes: generating, when the current blind spot grade is a safety driving grade, a pedestrian prediction trajectory corresponding to the safety driving grade as null.

According to the foregoing technical means, pedestrian trajectories corresponding to different blind spot grades are predicted, thus improving the safety driving performance of a user in a blind spot direction.

Further, in one embodiment of the present invention, before acquiring the first state information of the current vehicle, the second state information of the target vehicle, and the longitudinal relative distance and the lateral relative distance between the current vehicle and the target vehicle, the method further includes: acquiring current position information of the current vehicle and position information of a marker in a predetermined scene; and calculating a distance between the current position information and the position information of the marker in the predetermined scene, and acquiring the first state information of the current vehicle and the second state information of the target vehicle when the distance is less than a predetermined distance.

According to the foregoing technical means, position information of a current vehicle and a bus stop is acquired, and a distance therebetween is determined, so as to improve the accuracy of collecting pedestrian trajectories by a user, thus ensuring safety driving.

According to embodiments of a second aspect of the present invention, a vehicle safety control apparatus is provided, including: an acquisition module, configured to acquire first state information of a current vehicle, second state information of a target vehicle, and a longitudinal relative distance and a lateral relative distance between the current vehicle and the target vehicle, and determine a blind spot position and a crash region of the current vehicle according to the first state information and the second state information; a calculation module, configured to calculate a safety distance between the current vehicle and the crash region according to the first state information and the second state information, and determine a current blind spot grade of the current vehicle according to the longitudinal relative distance, the lateral relative distance, and the safety distance; and a control module, configured to generate, based on a predetermined trajectory generation model, a pedestrian prediction trajectory corresponding to the current blind spot grade, and input the pedestrian prediction trajectory corresponding to the current blind spot grade to a trajectory planning module of the current vehicle, so as to control, according to the pedestrian prediction trajectory corresponding to the current blind spot grade, the current vehicle to execute a deceleration action and/or an avoidance action.

Further, in one embodiment of the present invention, the acquisition module includes: a first acquisition unit, configured to acquire a current velocity and a current planned trajectory of the current vehicle, and obtain the first state information according to the current velocity and/or the current planned trajectory of the current vehicle; and a second acquisition unit, configured to acquire a current velocity, a current acceleration, a length, and a width of the target vehicle, and obtain the second state information according to the current velocity, the current acceleration, the length, and/or the width of the target vehicle.

Further, in one embodiment of the present invention, the acquisition module includes: a projection unit, configured to take a projection position of a leading edge center of a vehicle body of the target vehicle on a predetermined map as a blind spot position, and project the blind spot position to the current planned trajectory along a normal direction of a road; a judgment unit, configured to take, if a projection point is located on the current planned trajectory, the projection point as a crash point, otherwise, take a point on a center line of a lane where the target vehicle is currently located as the crash point; and a third acquisition unit, configured to obtain the crash region by taking the crash point as a center and the width of the target vehicle as a diameter.

Further, in one embodiment of the present invention, the calculation module includes: a first calculation unit, configured to calculate the safety distance between the current vehicle and the crash region based on a first safety distance formula when the target vehicle is in a stationary state, the first safety distance formula being:

$$D_s = v_{ego} * t_s + \frac{v_{ego}^2}{2 * a_{ego}};$$

a second calculation unit, configured to calculate the safety distance between the current vehicle and the crash region based on a second safety distance formula when the target vehicle is in a moving state, the second safety distance formula being:

$$D_s = v_{ego} * t_s + \frac{v_{ego}^2}{2 * a_{ego}} + \frac{v_{bus}^2}{2 * a_{bus}},$$

where $D_s$ is the safety distance between the current vehicle and the crash region, $v_{ego}$ is the velocity of the current vehicle, $t_s$ is a response time, $a_{ego}$ is a deceleration estimate of the current vehicle, $v_{bus}$ is the current velocity of the target vehicle, and $a_{bus}$ is the current acceleration of the target vehicle.

Further, in one embodiment of the present invention, the calculation module includes: a first determination unit, configured to determine, when the safety distance is greater than the longitudinal relative distance and the longitudinal relative distance is greater than a first predetermined value, the current blind spot grade as a caution driving grade; a second determination unit, configured to determine, when the safety distance is less than the longitudinal relative distance, the current blind spot grade as an attention driving grade; and a third determination unit, configured to determine, when the longitudinal relative distance is less than or equal to the first predetermined value or the lateral relative distance is greater than a second predetermined value, the current blind spot grade as a safety driving grade.

Further, in one embodiment of the present invention, the control module includes: a fourth determination unit, configured to take the blind spot position as a start point of the pedestrian prediction trajectory when the current blind spot grade is a caution driving grade; a first sampling unit, configured to translate the crash region toward the target vehicle along a normal direction of a road according to a width of the current vehicle, sample the translated crash region according to a first predetermined sampling rule, and take a sampling point as an end point of the pedestrian prediction trajectory; and a first generation unit, configured to generate, based on a predetermined third-order polynomial trajectory generation model, a pedestrian prediction trajectory corresponding to the caution driving grade according to the start point of the pedestrian prediction trajectory, the end point of the pedestrian prediction trajectory, a velocity of a pedestrian at the start point of the pedestrian prediction trajectory, and a velocity of the pedestrian at the end point of the pedestrian prediction trajectory.

Further, in one embodiment of the present invention, the control module includes: a fifth determination unit, configured to take the blind spot position as a start point of the pedestrian prediction trajectory when the current blind spot grade is an attention driving grade; a second sampling unit, configured to sample the crash region according to a second predetermined sampling rule, and take a sampling point as an end point of the pedestrian prediction trajectory; and a second generation unit, configured to generate, based on a predetermined second-order polynomial trajectory generation model, a pedestrian prediction trajectory corresponding to the attention driving grade according to the start point of the pedestrian prediction trajectory and the end point of the pedestrian prediction trajectory.

Further, in one embodiment of the present invention, the control module includes: a third generation unit, configured to generate, when the current blind spot grade is a safety driving grade, a pedestrian prediction trajectory corresponding to the safety driving grade as null.

Further, in one embodiment of the present invention, before acquiring the first state information of the current vehicle, the second state information of the target vehicle, and the longitudinal relative distance and the lateral relative distance between the current vehicle and the target vehicle, the acquisition module further includes: a fourth acquisition unit, configured to acquire current position information of the current vehicle and position information of a marker in a predetermined scene; and a third calculation unit, configured to calculate a distance between the current position information and the position information of the marker in the predetermined scene, and acquire the first state information of the current vehicle and the second state information of the target vehicle when the distance is less than a predetermined distance.

According to embodiments of a third aspect of the present invention, an electronic device is provided, including: a memory, a processor, and a computer program stored on the memory and executable on the processor. The processor executes the program to implement the vehicle safety control method according to the foregoing embodiments.

According to embodiments of a fourth aspect of the present invention, a computer-readable storage medium is provided, including a computer program stored thereon. The program is executed by a processor to implement the vehicle safety control method according to the foregoing embodiments.

According to the embodiments of the present invention, a blind spot position and a crash region of a current vehicle are determined by acquiring first state information of the current vehicle and second state information of a target vehicle, and calculating a safety distance between the current vehicle and the crash region. A current blind spot grade of the current vehicle is determined through obtained longitudinal and lateral relative distances between the current vehicle and the target vehicle and the safety distance. A corresponding pedestrian prediction trajectory is generated based on a predetermined trajectory generation model, and is inputted to a trajectory planning module of the current vehicle, so as to control the current vehicle to execute a deceleration action and/or an avoidance action. Therefore, the problem of traffic accidents caused by the fact that a vehicle cannot make an effective prediction and determination as an early warning system in the related art cannot obtain a pedestrian trajectory scene in advance is solved.

Additional aspects and advantages of the present invention will be set forth in part in the description which follows and, in part, will be obvious from the description, or may be learned by practice of the present invention.

## Brief Description of the Drawings

The foregoing and/or additional aspects and advantages of the present invention will become apparent and more readily appreciated from the following description of embodiments, taken in conjunction with the accompanying drawings in which:

Fig. 1 is a flowchart of a vehicle safety control method according to an embodiment of the present invention;

Fig. 2 is a flowchart of a blind spot processing method considering an unknown pedestrian prediction trajectory in a bus stop scene according to an embodiment of the present invention;

Fig. 3 is a schematic diagram of parameters and blind spots of a bus stop scene according to an embodiment of the present invention;

Fig. 4 is a schematic diagram of generation of unknown pedestrian prediction trajectories in a caution processing blind spot and an attention blind spot according to an embodiment of the present invention;

Fig. 5 is a schematic block diagram of a vehicle safety control apparatus according to an embodiment of the present invention; and

Fig. 6 is a schematic structural diagram of an electronic device according to an embodiment of the present invention.

Description of Reference Numerals: 10-vehicle safety control apparatus; 100-acquisition module; 200-calculation module; 300-control module.

## Detailed Description of the Embodiments

Reference will now be made in detail to the embodiments of the present invention, examples of which are illustrated in the accompanying drawings, where like or similar reference numerals refer to the same or similar elements or elements having the same or similar function throughout. The embodiments described below with reference to the accompanying drawings are exemplary and are intended to be illustrative of the present invention and are not to be construed as limiting the present invention.

Hereinafter, a vehicle safety control method and apparatus, a vehicle, and a storage medium according to embodiments of the present invention will be described with reference to the accompanying drawings. In view of the problem, mentioned in the Background of the Invention, of traffic accidents caused by the fact that a vehicle cannot make an effective prediction and determination as an early warning system in the related art cannot obtain a pedestrian trajectory scene in advance, the present invention provides a vehicle safety control method. In this method, a blind spot position and a crash region of a current vehicle are determined by acquiring first state information of the current vehicle and second state information of a target vehicle, and calculating a safety distance between the current vehicle and the crash region. A current blind spot grade of the current vehicle is determined through obtained longitudinal and lateral relative distances between the current vehicle and the target vehicle and the safety distance. A corresponding pedestrian prediction trajectory is generated based on a predetermined trajectory generation model, and is inputted to a trajectory planning module of the current vehicle, so as to control the current vehicle to execute a deceleration action and/or an avoidance action. Therefore, the problem of traffic accidents caused by the fact that a vehicle cannot make an effective prediction and determination as an early warning system in the related art cannot obtain a pedestrian trajectory scene in advance is solved. State information of a vehicle and a bus at a bus stop is jointly considered, and a blind spot grading response is made, thus improving the activeness of automatic driving vehicle planning in a bus stop scene and ensuring the driving safety.

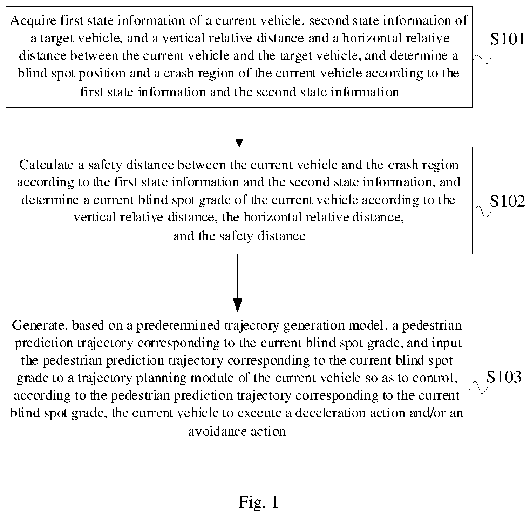

Specifically, Fig. 1 is a schematic flowchart of a vehicle safety control method according to an embodiment of the present invention.

As shown in Fig. 1, the vehicle safety control method includes the following steps.

In step S101, first state information of a current vehicle, second state information of a target vehicle, and a longitudinal relative distance and a lateral relative distance between the current vehicle and the target vehicle are acquired, and a blind spot position and a crash region of the current vehicle are determined according to the first state information and the second state information.

Specifically, in the embodiments of the present invention, state information of a current vehicle and a target vehicle, and a longitudinal relative distance and a lateral relative distance between the current vehicle and the target vehicle are required to be acquired, and a blind spot position and a crash region of the current vehicle are determined.

Further, in one embodiment of the present invention, before acquiring the first state information of the current vehicle, the second state information of the target vehicle, and the longitudinal relative distance and the lateral relative distance between the current vehicle and the target vehicle, the method further includes: acquiring current position information of the current vehicle and position information of a marker in a predetermined scene; and calculating a distance between the current position information and the position information of the marker in the predetermined scene, and acquiring the first state information of the current vehicle and the second state information of the target vehicle when the distance is less than a predetermined distance.

The predetermined distance may be a distance threshold set by those skilled in the art according to actual requirements, and may also be a distance threshold obtained through multiple simulations by a computer. The position information of the marker in the predetermined scene may be position information of a marker such as a bus stop, a bus, or a truck. The embodiments of the present invention may predict a travel trajectory of an unknown pedestrian in any one of the foregoing markers, which is not specifically defined herein.

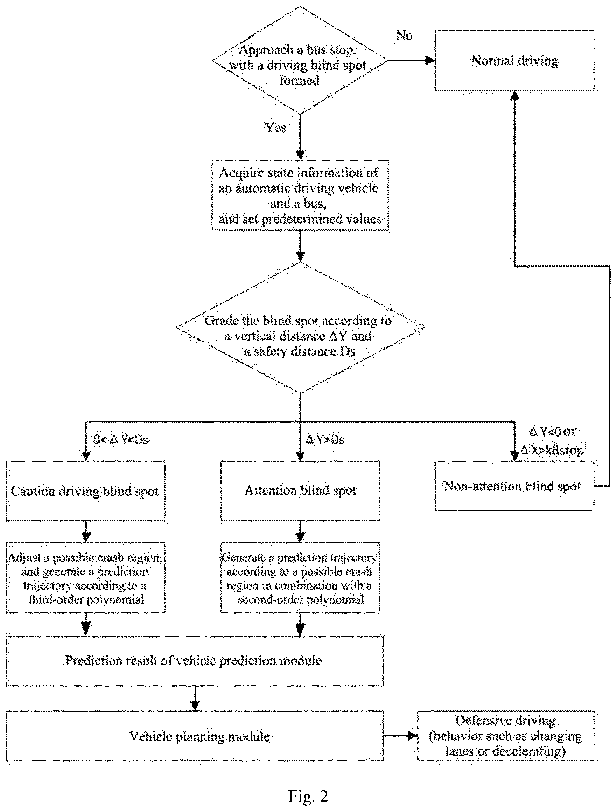

Specifically, as shown in Fig. 2, a bus stop scene is taken as a predetermined scene. According to the embodiments of the present invention, current position information $P_{ego}$ of a current vehicle and bus stop position information $P_{stop}$ are required to be acquired, and a distance dist between the current vehicle position information and the bus stop position information is calculated. If dist = $\|P_{stop}-P_{ego}\|_2$ is less than a predetermined bus stop range $R_{stop}$, that is, $\|P_{stop} - P_{ego}\|_2 < R_{stop}$, it is considered that the current vehicle enters a bus stop at this moment, and the blind spot processing method is enabled to acquire first state information of the current vehicle and second state information of a target vehicle.

Further, in one embodiment of the present invention, the acquiring first state information of a current vehicle and second state information of a target vehicle includes: acquiring a current velocity and a current planned trajectory of the current vehicle, and obtaining the first state information according to the current velocity and/or the current planned trajectory of the current vehicle; and acquiring a current velocity, a current acceleration, a length, and a width of the target vehicle, and obtaining the second state information according to the current velocity, the current acceleration, the length, and/or the width of the target vehicle.

Specifically, as shown in Fig. 2, according to the embodiments of the present invention, in the process of acquiring the first state information of the current vehicle and the second state information of the target vehicle, a longitudinal relative distance $\triangle Y$ and a lateral relative distance $\triangle X$ between the current vehicle and the target vehicle, a current velocity $v_{ego}$ and a current planned trajectory $T_{plan}$ of the current vehicle, a current velocity $v_{bus}$, a current acceleration $a_{bus}$, a length $L_{bus}$, and a width $W_{bus}$ of the target vehicle, a current vehicle width $W_{ego}$, and a pedestrian walking velocity $v_{ped}$ are acquired by a vehicle-mounted sensing system, the first state information of the current vehicle is obtained according to the current velocity and/or the current planned trajectory of the current vehicle, and the second state information of the target vehicle is obtained according to the current velocity, the current acceleration, the length, and/or the width of the target vehicle. The current vehicle may be a current automatic driving vehicle, and the target vehicle may be a bus.

Further, in one embodiment of the present invention, the determining a blind spot position and a crash region of the current vehicle according to the first state information and the second state information includes: taking a projection position of a leading edge center of a vehicle body of the target vehicle on a predetermined map as a blind spot position, and projecting the blind spot position to the current planned trajectory along a normal direction of a road; taking, if a projection point is located on the current planned trajectory, the projection point as a crash point, otherwise, taking a point on a center line of a lane where the target vehicle is currently located as the crash point; and obtaining the crash region by taking the crash point as a center and the width of the target vehicle as a diameter.

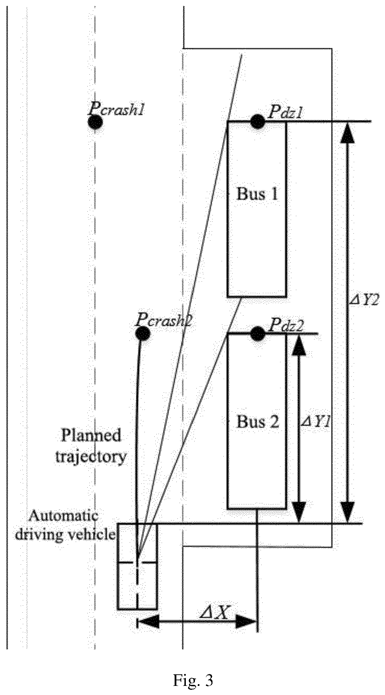

Specifically, a blind spot position and a crash region of the current vehicle are determined by the collected first state information of the current vehicle and second state information of the target vehicle. As shown in Fig. 3, it is assumed that a bus stop has two target vehicles. Firstly, the first target vehicle is taken as an example. A projection position of a front center of a vehicle body of the first target vehicle on a map is set as a blind spot position $P_{dz1}$ as a start point of an unknown pedestrian prediction trajectory. Then, the blind spot position $P_{dz1}$ is projected onto a current vehicle planned trajectory along a normal direction of a road. If the projection point is located on the current planned trajectory, this point of the planned trajectory is taken as a crash point $P_{crash1}$, and if the projection point is located beyond the planned trajectory, this point on a center line of a lane where the current vehicle is located as a crash point $P_{crash2}$. Similarly, the second target vehicle is taken as an example. A projection position of a front center of a vehicle body of the second target vehicle on a map is set as a blind spot position $P_{dz2}$ as a start point of an unknown pedestrian prediction trajectory. Then, the blind spot position $P_{dz2}$ is projected onto a current vehicle planned trajectory along a normal direction of a road. If the projection point is located on the current planned trajectory, this point of the planned trajectory is taken as a crash point $P_{crash1}$, and if the projection point is located beyond the planned trajectory, this point on a center line of a lane where the current vehicle is located as a crash point $P_{crash2}$.

It is to be noted that in consideration of the uncertainty of a pedestrian trajectory, the crash point may be set as a center and the current vehicle width $W_{ego}$ may be set as a diameter according to the embodiments of the present invention, whereby a circular region obtained is set as the crash region.

In step S102, a safety distance between the current vehicle and the crash region is calculated according to the first state information and the second state information, and a current blind spot grade of the current vehicle is determined according to the longitudinal relative distance, the lateral relative distance, and the safety distance.

Specifically, the embodiments of the present invention can effectively ensure that the vehicle does not crash with a pedestrian appearing possibly by calculating the safety distance between the current vehicle and the crash region and using a safety distance model as a basis for blind spot grade estimation.

It is to be noted that the safety distance is dynamically estimated in real time according to running states of the current vehicle and the target vehicle and relevant factors, which is of great significance for the driving safety and comfort of the current vehicle. The factors affecting the safety distance estimation include relevant parameters of the current vehicle and the target vehicle. Therefore, the safety distances in different moving states of the target vehicle causing the blind spot are required to be considered respectively. The following specific analysis is performed according to specific embodiments.

Further, in one embodiment of the present invention, the calculating a safety distance between the current vehicle and the crash region according to the first state information and the second state information includes: calculating the safety distance between the current vehicle and the crash region based on a first safety distance formula when the target vehicle is in a stationary state, the first safety distance formula being:

$$D_s = v_{ego} * t_s + \frac{v_{ego}^2}{2*a_{ego}};$$

calculating the safety distance between the current vehicle and the crash region based on a second safety distance formula when the target vehicle is in a moving state, the second safety distance formula being:

$$D_s = v_{ego} * t_s + \frac{v_{ego}^2}{2*a_{ego}} + \frac{v_{bus}^2}{2*a_{bus}},$$

where $D_s$ is the safety distance between the current vehicle and the crash region, $v_{ego}$ is the velocity of the current vehicle, $t_s$ is a response time, $a_{ego}$ is a deceleration estimate of the current vehicle, $v_{bus}$ is the current velocity of the target vehicle, and $a_{bus}$ is the current acceleration of the target vehicle.

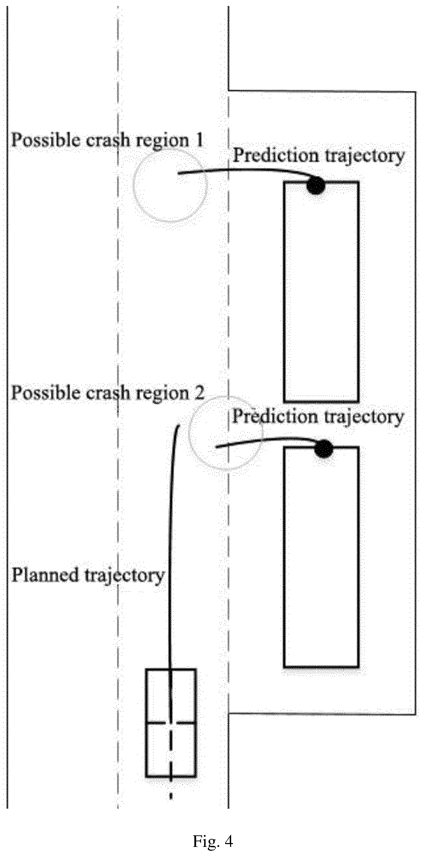

Specifically, Fig. 4 shows two target vehicles. It is assumed that the first target vehicle is in a stationary state and the second target vehicle is in a moving state. Since the first target vehicle is in the stationary state, only the velocity $v_{ego}$ and acceleration $a_{ego}$ of the current vehicle are considered, and the safety distance between the current vehicle and the crash region, that is, a first safety distance, is calculated based on the following formula:

$$D_s = v_{ego} * t_s + \frac{v_{ego}^2}{2*a_{ego}}. \tag{1}$$

Optionally, for the second target vehicle, the safety distance between the current vehicle and the crash region, that is, a second safety distance, is calculated according to the velocity $v_{ego}$ and acceleration $a_{ego}$ of the current vehicle, and the velocity $v_{bus}$ and acceleration $a_{bus}$ of the target vehicle based on the following formula:

$$D_s = v_{ego} * t_s + \frac{v_{ego}^2}{2*a_{ego}} + \frac{v_{bus}^2}{2*a_{bus}}. \tag{2}$$

$D_s$ is the safety distance between the current vehicle and the crash region, $t_s$ is the response time, that is, time consumed for a state estimation of the system, and $a_{ego}$ is the deceleration estimate of the current vehicle.

Further, in one embodiment of the present invention, the determining a current blind spot grade of the current vehicle according to the longitudinal relative distance, the lateral relative distance, and the safety distance includes: determining, when the safety distance is greater than the longitudinal relative distance and the longitudinal relative distance is greater than a first predetermined value, the current blind spot grade as a caution driving grade; determining, when the safety distance is less than the longitudinal relative distance, the current blind spot grade as an attention driving grade; and determining, when the longitudinal relative distance is less than or equal to the first predetermined value or the lateral relative distance is greater than a second predetermined value, the current blind spot grade as a safety driving grade.

The first predetermined value and the second predetermined value may be thresholds set by those skilled in the art, or may be thresholds obtained through multiple simulations by a computer, and the predetermined values thereof are different in different predetermined scenes, and are not specifically defined herein.

Specifically, when the target vehicle is in the stationary state, the calculated safety distance between the current vehicle and the crash region is greater than the longitudinal relative distance between the target vehicle and the current vehicle, that is, $D_s > \Delta Y$. When the target vehicle is in the moving state, the safety distance is less than the longitudinal relative distance between the target vehicle and the current vehicle, that is, $D_s < \Delta Y$.

Further, according to the embodiments of the present invention, the blind spot is further graded by determining the safety distance and the magnitude of the longitudinal relative distance between the target vehicle and the current vehicle.

Specifically, when the safety distance is greater than the longitudinal relative distance between the target vehicle and the current vehicle and the longitudinal relative distance is greater than a first predetermined value (such as 0), that is, $D_s > \Delta Y > 0$, the blind spot is evaluated as a caution driving blind spot, that is, the blind spot grade is a caution driving grade. When the safety distance is less than the longitudinal relative distance between the target vehicle and the current vehicle, a blind spot generated by blocking of the target vehicle is evaluated as an attention blind spot, that is, the blind spot grade is an attention driving grade. When the longitudinal relative distance is less than or equal to the first predetermined value, or the lateral relative distance is greater than a second predetermined value (such as $kR_{stop}$, $k$ being a horizontal distance coefficient), that is, $\Delta Y \leq 0$ or $\Delta X > kR_{stop}$, there is a sufficient horizontal distance between the target vehicle and the current vehicle. Therefore, the current blind spot is evaluated as a non-attention blind spot, that is, the blind spot grade is a safety driving grade.

In step S103, a pedestrian prediction trajectory corresponding to the current blind spot grade is generated based on a predetermined trajectory generation model, and the pedestrian prediction trajectory corresponding to the current blind spot grade is inputted to a trajectory planning module of the current vehicle, so as to control, according to the pedestrian prediction trajectory corresponding to the current blind spot grade, the current vehicle to execute a deceleration action and/or an avoidance action.

Specifically, as shown in Fig. 4, according to the embodiments of the present invention, grading response measures are taken according to the blind spot grade determined above, and unknown pedestrian predicted trajectories are generated for the blind spots of different attention grades according to the following method, and transmitted to an automatic driving vehicle planning module, thus realizing the active defensive driving of the current vehicle.

Further, in one embodiment of the present invention, the generating, based on a predetermined trajectory generation model, a pedestrian prediction trajectory corresponding to the current blind spot grade includes: taking the blind spot position as a start point of the pedestrian prediction trajectory when the current blind spot grade is a caution driving grade; translating the crash region toward the target vehicle along a normal direction of a road according to a width of the current vehicle, sampling the translated crash region according to a first predetermined sampling rule, and taking a sampling point as an end point of the pedestrian prediction trajectory; and generating, based on a predetermined third-order polynomial trajectory generation model, a pedestrian prediction trajectory corresponding to the caution driving grade according to the start point of the pedestrian prediction trajectory, the end point of the pedestrian prediction trajectory, a velocity of a pedestrian at the start point of the pedestrian prediction trajectory, and a velocity of the pedestrian at the end point of the pedestrian prediction trajectory.

The predetermined trajectory generation model may be a trajectory generation model set by those skilled in the art according to different blind spot grades, and is not specifically defined herein.

Specifically, as shown in Fig. 4, if the current blind spot grade is a caution driving grade, the blind spot position is taken as a start point of an unknown pedestrian prediction trajectory, the crash region is translated toward the bus along the normal direction of the road by the width $W_{ego}$ of the automatic driving vehicle, the translated crash region is randomly sampled, and the sampling point is taken as an end point of a prediction trajectory. In order to ensure that the generated prediction trajectory is reasonable and feasible, a third-order polynomial of a path with an intermediate point is used as a trajectory generation model. Constraint conditions include a start point of a trajectory, an end point of the trajectory, an initial velocity at the start point, and a velocity at the end point. The initial velocity of a pedestrian at the start point is 0, and an empirical value of a walking velocity of the pedestrian is taken as the velocity at the end point, thereby obtaining a prediction trajectory equation, and taking discrete trajectory points between the start point and the end point as a prediction trajectory of an unknown pedestrian in the blind spot.

Further, in one embodiment of the present invention, the generating, based on a predetermined trajectory generation model, a pedestrian prediction trajectory corresponding to the current blind spot grade includes: taking the blind spot position as a start point of the pedestrian prediction trajectory when the current blind spot grade is an attention driving grade; sampling the crash region according to a second predetermined sampling rule, and taking a sampling point as an end point of the pedestrian prediction trajectory; and generating, based on a predetermined second-order polynomial trajectory generation model, a pedestrian prediction trajectory corresponding to the attention driving grade according to the start point of the pedestrian prediction trajectory and the end point of the pedestrian prediction trajectory.

Specifically, if the current blind spot grade is an attention driving grade, the blind spot position is taken as the start point of the unknown pedestrian prediction trajectory. The velocity of the unknown pedestrian at the start point is 0, the crash region is discretized, and then the end point of the prediction trajectory is obtained in discrete coordinate points by a random sampling algorithm. Constraint conditions include a start point of a trajectory, an end point of the trajectory, and an initial velocity at the start point. The unknown pedestrian prediction trajectory is generated by using an interpolation method based on a second-order polynomial trajectory generation model, and the trajectory is taken as the prediction trajectory corresponding to the attention blind spot.

Further, in one embodiment of the present invention, the generating, based on a predetermined trajectory generation model, a pedestrian prediction trajectory corresponding to the current blind spot grade includes: generating, when the current blind spot grade is a safety driving grade, a pedestrian prediction trajectory corresponding to the safety driving grade as null.

Specifically, when the current blind spot grade is a safety driving grade, a pedestrian prediction trajectory corresponding to the safety driving grade is null. That is, the current vehicle travels normally, and no processing is performed.

Further, according to the embodiments of the present invention, after an unknown pedestrian prediction trajectory is generated according to different methods for different attention grade blind spots, the trajectory is added to a current vehicle prediction module result, and a pedestrian prediction trajectory corresponding to the current blind spot grade is inputted to a trajectory planning module of the current vehicle, whereby the current vehicle actively generates defensive driving behaviors such as deceleration or avoidance.

In summary, the embodiments of the present invention have the following beneficial effects.

(1) The present invention can strengthen a perception prediction capability for a blind spot without adding additional hardware devices (such as an automatic driving vehicle perception sensor or a roadside perception device), and is more practical in a bus stop scene than a prediction method which needs to track a historical trajectory.

(2) The present invention can make a judgment in advance and actively take preventive measures in a bus stop scene where people and vehicles are mixed by performing attention grading on a blind spot and presetting possible dangerous situations such as "sudden appearance from a blind spot", so as to achieve positive defensive driving and improve the ability to deal with sudden situations occurring in the blind spot.

According to the vehicle safety control method in the embodiments of the present invention, a blind spot position and a crash region of a current vehicle are determined by acquiring first state information of the current vehicle and second state information of a target vehicle, and calculating a safety distance between the current vehicle and the crash region. A current blind spot grade of the current vehicle is determined through obtained longitudinal and lateral relative distances between the current vehicle and the target vehicle and the safety distance. A corresponding pedestrian prediction trajectory is generated based on a predetermined trajectory generation model, and is inputted to a trajectory planning module of the current vehicle, so as to control the current vehicle to execute a deceleration action and/or an avoidance action. Therefore, the problem of traffic accidents caused by the fact that a vehicle cannot make an effective prediction and determination as an early warning system in the related art cannot obtain a pedestrian trajectory scene in advance is solved. State information of a vehicle and a bus at a bus stop is jointly considered, and a blind spot grading response is made, thus improving the activeness of automatic driving vehicle planning in a bus stop scene and ensuring the driving safety.

Next, a vehicle safety control apparatus according to an embodiment of the present invention will be described with reference to the accompanying drawings.

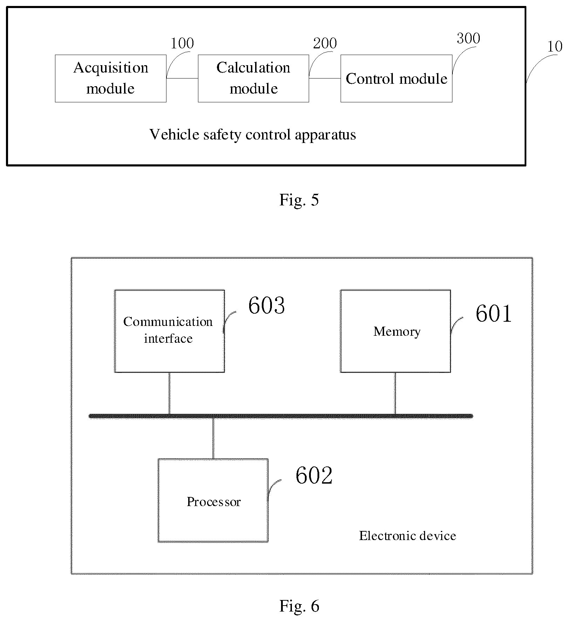

Fig. 5 is a schematic block diagram of a vehicle safety control apparatus according to an embodiment of the present invention.

As shown in Fig. 5, the vehicle safety control apparatus 10 includes an acquisition module 100, a calculation module 200, and a control module 300.

The acquisition module 100 is configured to acquire first state information of a current vehicle, second state information of a target vehicle, and a longitudinal relative distance and a lateral relative distance between the current vehicle and the target vehicle, and determine a blind spot position and a crash region of the current vehicle according to the first state information and the second state information.

The calculation module 200 is configured to calculate a safety distance between the current vehicle and the crash region according to the first state information and the second state information, and determine a current blind spot grade of the current vehicle according to the longitudinal relative distance, the lateral relative distance, and the safety distance.

The control module 300 is configured to generate, based on a predetermined trajectory generation model, a pedestrian prediction trajectory corresponding to the current blind spot grade, and input the pedestrian prediction trajectory corresponding to the current blind spot grade to a trajectory planning module of the current vehicle, so as to control, according to the pedestrian prediction trajectory corresponding to the current blind spot grade, the current vehicle to execute a deceleration action and/or an avoidance action.

Further, in one embodiment of the present invention, the acquisition module 100 includes a first acquisition unit and a second acquisition unit.

The first acquisition unit is configured to acquire a current velocity and a current planned trajectory of the current vehicle, and obtain the first state information according to the current velocity and/or the current planned trajectory of the current vehicle.

The second acquisition unit is configured to acquire a current velocity, a current acceleration, a length, and a width of the target vehicle, and obtain the second state information according to the current velocity, the current acceleration, the length, and/or the width of the target vehicle.

Further, in one embodiment of the present invention, the acquisition module 100 includes a projection unit, a judgment unit, and a third acquisition unit.

The projection unit is configured to take a projection position of a leading edge center of a vehicle body of the target vehicle on a predetermined map as a blind spot position, and project the blind spot position to the current planned trajectory along a normal direction of a road.

The judgment unit is configured to take, if a projection point is located on the current planned trajectory, the projection point as a crash point, otherwise, take a point on a center line of a lane where the target vehicle is currently located as the crash point.

The third acquisition unit is configured to obtain the crash region by taking the crash point as a center and the width of the target vehicle as a diameter.

Further, in one embodiment of the present invention, the calculation module 200 includes a first calculation unit and a second calculation unit.

The first calculation unit is configured to calculate the safety distance between the current vehicle and the crash region based on a first safety distance formula when the target vehicle is in a stationary state. The first safety distance formula is:

$$D_s = v_{ego} * t_s + \frac{v_{ego}^2}{2*a_{ego}}.$$

The second calculation unit is configured to calculate the safety distance between the current vehicle and the crash region based on a second safety distance formula when the target vehicle is in a moving state. The second safety distance formula is:

$$D_s = v_{ego} * t_s + \frac{v_{ego}^2}{2*a_{ego}} + \frac{v_{bus}^2}{2*a_{bus}}.$$

$D_s$ is the safety distance between the current vehicle and the crash region, $v_{ego}$ is the velocity of the current vehicle, $t_s$ is a response time, $a_{ego}$ is a deceleration estimate of the current vehicle, $v_{bus}$ is the current velocity of the target vehicle, and $a_{bus}$ is the current acceleration of the target vehicle.

Further, in one embodiment of the present invention, the calculation module 200 includes a first determination unit, a second determination unit, and a third determination unit.

The first determination unit is configured to determine, when the safety distance is greater than the longitudinal relative distance and the longitudinal relative distance is greater than a first predetermined value, the current blind spot grade as a caution driving grade.

The second determination unit is configured to determine, when the safety distance is less than the longitudinal relative distance, the current blind spot grade as an attention driving grade.

The third determination unit is configured to determine, when the longitudinal relative distance is less than or equal to the first predetermined value or the lateral relative distance is greater than a second predetermined value, the current blind spot grade as a safety driving grade.

Further, in one embodiment of the present invention, the control module 300 includes a fourth determination unit, a first sampling unit, and a first generation unit.

The fourth determination unit is configured to take the blind spot position as a start point of the pedestrian prediction trajectory when the current blind spot grade is a caution driving grade.

The first sampling unit is configured to translate the crash region toward the target vehicle along a normal direction of a road according to a width of the current vehicle, sample the translated crash region according to a first predetermined sampling rule, and take a sampling point as an end point of the pedestrian prediction trajectory.

The first generation unit is configured to generate, based on a predetermined third-order polynomial trajectory generation model, a pedestrian prediction trajectory corresponding to the caution driving grade according to the start point of the pedestrian prediction trajectory, the end point of the pedestrian prediction trajectory, a velocity of a pedestrian at the start point of the pedestrian prediction trajectory, and a velocity of the pedestrian at the end point of the pedestrian prediction trajectory.

Further, in one embodiment of the present invention, the control module 300 includes a fifth determination unit, a second sampling unit, and a second generation unit.

The fifth determination unit is configured to take the blind spot position as a start point of the pedestrian prediction trajectory when the current blind spot grade is an attention driving grade.

The second sampling unit is configured to sample the crash region according to a second predetermined sampling rule, and take a sampling point as an end point of the pedestrian prediction trajectory.

The second generation unit is configured to generate, based on a predetermined second-order polynomial trajectory generation model, a pedestrian prediction trajectory corresponding to the attention driving grade according to the start point of the pedestrian prediction trajectory and the end point of the pedestrian prediction trajectory.

Further, in one embodiment of the present invention, the control module 300 includes:

a third generation unit, configured to generate, when the current blind spot grade is a safety driving grade, a pedestrian prediction trajectory corresponding to the safety driving grade as null.

Further, in one embodiment of the present invention, before acquiring the first state information of the current vehicle, the second state information of the target vehicle, and the longitudinal relative distance and the lateral relative distance between the current vehicle and the target vehicle, the acquisition module 100 further includes a fourth acquisition unit and a third calculation unit.

The fourth acquisition unit is configured to acquire current position information of the current vehicle and position information of a marker in a predetermined scene.

The third calculation unit is configured to calculate a distance between the current position information and the position information of the marker in the predetermined scene, and acquire the first state information of the current vehicle and the second state information of the target vehicle when the distance is less than a predetermined distance.

According to the vehicle safety control apparatus in the embodiments of the present invention, a blind spot position and a crash region of a current vehicle are determined by acquiring first state information of the current vehicle and second state information of a target vehicle, and calculating a safety distance between the current vehicle and the crash region. A current blind spot grade of the current vehicle is determined through obtained longitudinal and lateral relative distances between the current vehicle and the target vehicle and the safety distance. A corresponding pedestrian prediction trajectory is generated based on a predetermined trajectory generation model, and is inputted to a trajectory planning module of the current vehicle, so as to control the current vehicle to execute a deceleration action and/or an avoidance action. Therefore, the problem of traffic accidents caused by the fact that a vehicle cannot make an effective prediction and determination as an early warning system in the related art cannot obtain a pedestrian trajectory scene in advance is solved. State information of a vehicle and a bus at a bus stop is jointly considered, and a blind spot grading response is made, thus improving the activeness of automatic driving vehicle planning in a bus stop scene and ensuring the driving safety.

Fig. 6 is a schematic structural diagram of an electronic device according to an embodiment of the present invention. The electronic device may include:

a memory 601, a processor 602, and a computer program stored on the memory 601 and executable on the processor 602.

The processor 602, when executing the program, implements the vehicle safety control method provided in the foregoing embodiments.

Further, the electronic device also includes:

a communication interface 603 for communication between the memory 601 and the processor 602.

The memory 601 is configured to store the computer program executable on the processor 602.

The memory 601 may include a high velocity random access memory (RAM), and may also include a non-volatile memory, such as at least one disk memory.

If the memory 601, the processor 602, and the communication interface 603 are implemented independently, the communication interface 603, the memory 601, and the processor 602 may be connected to each other via a bus and communicate with each other. The bus may be an industry standard architecture (ISA) bus, a peripheral component (PCI) bus or an extended industry standard architecture (EISA) bus, and the like. The bus may be divided into an address bus, a data bus, a control bus, and the like. For ease of illustration, the bus is represented by only one bold line in Fig. 6. However, it is not indicated that there is only one bus or type of bus.

Optionally, in a specific implementation, if the memory 601, the processor 602, and the communication interface 603 are integrated on one chip, the memory 601, the processor 602, and the communication interface 603 may communicate with each other through an internal interface.

The processor 602 may be a central processing unit (CPU), or an application specific integrated circuit (ASIC), or one or more integrated circuits configured to implement the embodiments of the present invention.

Embodiments of the present invention also provide a computer-readable storage medium, including a computer program stored thereon. The program, when executed by a processor, implements the vehicle safety control method as described above.

In the descriptions of this specification, references to the descriptions of the terms "one embodiment", "some embodiments", "example", "specific example", or "some examples", etc. mean that a particular feature, structure, material, or characteristic described in connection with this embodiment or example is included in at least one embodiment or example of the present invention. In this specification, schematic representations of the foregoing terms are not necessarily directed to the same embodiment or example. Moreover, the particular feature, structure, material, or characteristic described may be combined in any suitable manner in any one or N embodiments or examples. Furthermore, different embodiments or examples described in this specification and features of different embodiments or examples may be combined by those skilled in the art without contradicting one another.

Furthermore, the terms "first" and "second" are used for descriptive purposes only and are not to be construed as indicating or implying relative importance or as implicitly indicating the number of technical features indicated. Thus, features defined as "first" or "second" may explicitly or implicitly include at least one of the features. In the descriptions of the present invention, "N" means at least two, for example, two, three, etc. unless specifically and specifically limited otherwise.

Any process or method description in a flowchart or otherwise described herein may be understood to represent a module, segment, or portion of code including one or N executable instructions for implementing the steps of a custom logic function or process, and the scope of the present invention includes additional implementations where the functions may be performed in a substantially simultaneous manner, or in a reverse order, out of the order shown or discussed, including depending on the functionality involved, as would be understood by those skilled in the art to which the embodiments of the present invention pertain.

It will be understood that portions of the present invention may be implemented in hardware, software, firmware, or a combination thereof. In the foregoing embodiments, the N steps or methods may be implemented in software or firmware stored in the memory and executed by a suitable instruction execution system. For example, if implemented in hardware as in another embodiment, it may be implemented using any one or combination of the following technologies known in the art: discrete logic circuits having logic gates for implementing logic functions on data signals, application specific integrated circuits having suitable combinational logic gates, programmable gate arrays, field programmable gate arrays, and the like.

It will be appreciated by those of ordinary skill in the art that all or a portion of the steps carried out by the methods of the foregoing embodiments may be performed by hardware associated with a program which may be stored in a computer-readable storage medium. The program, when executed, includes one or a combination of the steps of the method embodiments.

While the embodiments of the present invention have been shown and described above, it will be understood that the foregoing embodiments are exemplary and are not to be construed as limitations of the present invention, and that variations, modifications, substitutions, and alterations to the foregoing embodiments may be made by those of ordinary skill in the art within the scope of the present invention.

**Claims**

1. A vehicle safety control method, comprising the following steps:

   acquiring first state information of a current vehicle, second state information of a target vehicle, and a longitudinal relative distance ($\Delta Y$) and a lateral relative distance ($\Delta X$) between the current vehicle and the target vehicle, and determining a blind spot position ($P_{dz1}$, $P_{dz2}$) and a crash region ($P_{crash1}$, $P_{crash2}$) of the current vehicle according to the first state information and the second state information (S101);
   **characterized in that**,
   calculating a safety distance ($D_s$) between the current vehicle and the crash region according to the first state information and the second state information, and determining a current blind spot grade of the current vehicle according to the longitudinal relative distance ($\Delta Y$), the lateral relative distance ($\Delta X$), and the safety distance (S102); and
   generating, based on a predetermined trajectory generation model, a pedestrian prediction trajectory corresponding to the current blind spot grade, and inputting the pedestrian prediction trajectory corresponding to the current blind spot grade to a trajectory planning module of the current vehicle, so as to control, according to the pedestrian prediction trajectory corresponding to the current blind spot grade, the current vehicle to execute a deceleration action and/or an avoidance action (S103).

2. The method according to claim 1, wherein the acquiring first state information of a current vehicle and second state information of a target vehicle comprises:

   acquiring a current velocity ($v_{ego}$) and a current planned trajectory ($T_{plan}$) of the current vehicle, and obtaining the first state information according to the current velocity and/or the current planned trajectory of the current vehicle; and

acquiring a current velocity ($v_{bus}$), a current acceleration ($a_{bus}$), a length ($L_{bus}$), and a width ($W_{bus}$) of the target vehicle, and obtaining the second state information according to the current velocity, the current acceleration, the length, and/or the width of the target vehicle.

3. The method according to claim 2, wherein the determining a blind spot position and a crash region of the current vehicle according to the first state information and the second state information comprises:

taking a projection position of a leading edge center of a vehicle body of the target vehicle on a predetermined map as a blind spot position, and projecting the blind spot position to the current planned trajectory along a normal direction of a road;

taking, if a projection point is located on the current planned trajectory, the projection point as a crash point, otherwise, taking a point on a center line of a lane where the target vehicle is currently located as the crash point; and

obtaining the crash region by taking the crash point as a center and the width of the target vehicle as a diameter.

4. The method according to claim 2, wherein the calculating a safety distance between the current vehicle and the crash region according to the first state information and the second state information comprises:

calculating the safety distance between the current vehicle and the crash region based on a first safety distance formula when the target vehicle is in a stationary state, the first safety distance formula being:

$$D_s = v_{ego} * t_s + \frac{v_{ego}^2}{2*a_{ego}};$$

calculating the safety distance between the current vehicle and the crash region based on a second safety distance formula when the target vehicle is in a moving state, the second safety distance formula being:

$$D_s = v_{ego} * t_s + \frac{v_{ego}^2}{2*a_{ego}} + \frac{v_{bus}^2}{2*a_{bus}},$$

wherein $D_s$ is the safety distance between the current vehicle and the crash region, $v_{ego}$ is the velocity of the current vehicle, $t_s$ is a response time, $a_{ego}$ is a deceleration estimate of the current vehicle, $v_{bus}$ is the current velocity of the target vehicle, and $a_{bus}$ is the current acceleration of the target vehicle.

5. The method according to claim 4, wherein the determining a current blind spot grade of the current vehicle according to the longitudinal relative distance ($\varDelta Y$), the lateral relative distance ($\varDelta X$), and the safety distance comprises:

determining, when the safety distance is greater than the longitudinal relative distance ($\varDelta Y$) and the longitudinal relative distance ($\varDelta Y$) is greater than a first predetermined value, the current blind spot grade as a caution driving grade;

determining, when the safety distance is less than the longitudinal relative distance ($\varDelta Y$), the current blind spot grade as an attention driving grade; and

determining, when the longitudinal relative distance ($\varDelta Y$) is less than or equal to the first predetermined value or the lateral relative distance ($\varDelta X$) is greater than a second predetermined value, the current blind spot grade as a safety driving grade.

6. The method according to claim 1, wherein the generating, based on a predetermined trajectory generation model, a pedestrian prediction trajectory corresponding to the current blind spot grade comprises:

taking the blind spot position as a start point of the pedestrian prediction trajectory when the current blind spot grade is a caution driving grade;

translating the crash region toward the target vehicle along a normal direction of a road according to a width of the current vehicle, sampling the translated crash region according to a first predetermined sampling rule, and taking a sampling point as an end point of the pedestrian prediction trajectory; and

generating, based on a predetermined third-order polynomial trajectory generation model, a pedestrian prediction trajectory corresponding to the caution driving grade according to the start point of the pedestrian prediction trajectory, the end point of the pedestrian prediction trajectory, a velocity of a pedestrian at the start point of the pedestrian prediction trajectory, and a velocity of the pedestrian at the end point of the pedestrian prediction trajectory.

7. The method according to claim 1, wherein the generating, based on a predetermined trajectory generation model, a pedestrian prediction trajectory corresponding to the current blind spot grade comprises:

taking the blind spot position as a start point of the pedestrian prediction trajectory when the current blind spot grade is an attention driving grade;
sampling the crash region according to a second predetermined sampling rule, and taking a sampling point as an end point of the pedestrian prediction trajectory; and
generating, based on a predetermined second-order polynomial trajectory generation model, a pedestrian prediction trajectory corresponding to the attention driving grade according to the start point of the pedestrian prediction trajectory and the end point of the pedestrian prediction trajectory.

8. The method according to claim 1, wherein the generating, based on a predetermined trajectory generation model, a pedestrian prediction trajectory corresponding to the current blind spot grade comprises:
generating, when the current blind spot grade is a safety driving grade, a pedestrian prediction trajectory corresponding to the safety driving grade as null.

9. The method according to claim 1, wherein before acquiring the first state information of the current vehicle, the second state information of the target vehicle, and the longitudinal relative distance $(\Delta Y)$ and the lateral relative distance $(\Delta X)$ between the current vehicle and the target vehicle, the method further comprises:

acquiring current position information of the current vehicle and position information of a marker in a predetermined scene; and
calculating a distance between the current position information and the position information of the marker in the predetermined scene, and acquiring the first state information of the current vehicle and the second state information of the target vehicle when the distance is less than a predetermined distance.

10. A vehicle safety control apparatus (10), comprising:

an acquisition module (100), configured to acquire first state information of a current vehicle, second state information of a target vehicle, and a longitudinal relative distance $(\Delta Y)$ and a lateral relative distance $(\Delta X)$ between the current vehicle and the target vehicle, and determine a blind spot position $(P_{dz1}, P_{dz2})$ and a crash region $(P_{crash1}, P_{crash2})$ of the current vehicle according to the first state information and the second state information;
**characterized in that**,
a calculation module (200), configured to calculate a safety distance $(D_s)$ between the current vehicle and the crash region according to the first state information and the second state information, and determine a current blind spot grade of the current vehicle according to the longitudinal relative distance $(\Delta Y)$, the lateral relative distance $(\Delta X)$, and the safety distance; and
a control module (300), configured to generate, based on a predetermined trajectory generation model, a pedestrian prediction trajectory corresponding to the current blind spot grade, and input the pedestrian prediction trajectory corresponding to the current blind spot grade to a trajectory planning module of the current vehicle, so as to control, according to the pedestrian prediction trajectory corresponding to the current blind spot grade, the current vehicle to execute a deceleration action and/or an avoidance action.

11. The apparatus according to claim 10, wherein the acquisition module comprises:

a first acquisition unit, configured to acquire a current velocity $(v_{ego})$ and a current planned trajectory $(T_{plan})$ of the current vehicle, and obtain the first state information according to the current velocity and/or the current planned trajectory of the current vehicle; and
a second acquisition unit, configured to acquire a current velocity $(v_{bus})$, *a* current acceleration $(a_{bus})$, a length $(L_{bus})$, and a width $(W_{bus})$ of the target vehicle, and obtain the second state information according to the current velocity, the current acceleration, the length, and/or the width of the target vehicle.

**12.** The apparatus according to claim 11, wherein the acquisition module comprises:

a projection unit, configured to take a projection position of a leading edge center of a vehicle body of the target vehicle on a predetermined map as a blind spot position, and project the blind spot position to the current planned trajectory along a normal direction of a road;

a judgment unit, configured to take, if a projection point is located on the current planned trajectory, the projection point as a crash point, otherwise, take a point on a center line of a lane where the target vehicle is currently located as the crash point; and

a third acquisition unit, configured to obtain the crash region by taking the crash point as a center and the width of the target vehicle as a diameter.

**13.** The apparatus according to claim 11, wherein the calculation module comprises:

a first calculation unit, configured to calculate the safety distance between the current vehicle and the crash region based on a first safety distance formula when the target vehicle is in a stationary state, the first safety distance formula being:

$$D_s = v_{ego} * t_s + \frac{v_{ego}^2}{2 * a_{ego}};$$

a second calculation unit, configured to calculate the safety distance between the current vehicle and the crash region based on a second safety distance formula when the target vehicle is in a moving state, the second safety distance formula being:

$$D_s = v_{ego} * t_s + \frac{v_{ego}^2}{2 * a_{ego}} + \frac{v_{bus}^2}{2 * a_{bus}},$$

wherein $D_s$ is the safety distance between the current vehicle and the crash region, $v_{ego}$ is the velocity of the current vehicle, $t_s$ is a response time, $a_{ego}$ is a deceleration estimate of the current vehicle, $v_{bus}$ is the current velocity of the target vehicle, and $a_{bus}$ is the current acceleration of the target vehicle.

**14.** The apparatus according to claim 13, wherein the calculation module comprises:

a first determination unit, configured to determine, when the safety distance is greater than the longitudinal relative distance ($\Delta Y$) and the longitudinal relative distance ($\Delta Y$) is greater than a first predetermined value, the current blind spot grade as a caution driving grade;

a second determination unit, configured to determine, when the safety distance is less than the longitudinal relative distance ($\Delta Y$), the current blind spot grade as an attention driving grade; and

a third determination unit, configured to determine, when the longitudinal relative distance ($\Delta Y$) is less than or equal to the first predetermined value or the lateral relative distance ($\Delta X$) is greater than a second predetermined value, the current blind spot grade as a safety driving grade.

**15.** The apparatus according to claim 10, wherein the control module comprises:

a fourth determination unit, configured to take the blind spot position as a start point of the pedestrian prediction trajectory when the current blind spot grade is a caution driving grade;

a first sampling unit, configured to translate the crash region toward the target vehicle along a normal direction of a road according to a width of the current vehicle, sample the translated crash region according to a first predetermined sampling rule, and take a sampling point as an end point of the pedestrian prediction trajectory; and

a first generation unit, configured to generate, based on a predetermined third-order polynomial trajectory generation model, a pedestrian prediction trajectory corresponding to the caution driving grade according to the start point of the pedestrian prediction trajectory, the end point of the pedestrian prediction trajectory, a velocity of a pedestrian at the start point of the pedestrian prediction trajectory, and a velocity of the pedestrian at the end point of the pedestrian prediction trajectory.

**16.** The apparatus according to claim 10, wherein the control module comprises:

a fifth determination unit, configured to take the blind spot position as a start point of the pedestrian prediction trajectory when the current blind spot grade is an attention driving grade;

a second sampling unit, configured to sample the crash region according to a second predetermined sampling rule, and take a sampling point as an end point of the pedestrian prediction trajectory; and

a second generation unit, configured to generate, based on a predetermined second-order polynomial trajectory generation model, a pedestrian prediction trajectory corresponding to the attention driving grade according to the start point of the pedestrian prediction trajectory and the end point of the pedestrian prediction trajectory.

17. The apparatus according to claim 10, wherein the control module comprises:

a third generation unit, configured to generate, when the current blind spot grade is a safety driving grade, a pedestrian prediction trajectory corresponding to the safety driving grade as null.

18. The apparatus according to claim 10, wherein before acquiring the first state information of the current vehicle, the second state information of the target vehicle, and the longitudinal relative distance ($\Delta Y$) and the lateral relative distance ($\Delta X$) between the current vehicle and the target vehicle, the acquisition module further comprises:

a fourth acquisition unit, configured to acquire current position information of the current vehicle and position information of a marker in a predetermined scene; and

a third calculation unit, configured to calculate a distance between the current position information and the position information of the marker in the predetermined scene, and acquire the first state information of the current vehicle and the second state information of the target vehicle when the distance is less than a predetermined distance.

19. A vehicle, comprising a vehicle safety control apparatus according to any one of claims 10-18.

20. A computer-readable storage medium, comprising a computer program stored thereon, wherein the program is executed by a processor to implement the vehicle safety control method according to any one of claims 1 to 9.

## Patentansprüche

1. Verfahren zur Fahrzeugsicherheitssteuerung, das die folgenden Schritte umfasst:

Erfassen einer ersten Zustandsinformation eines aktuellen Fahrzeugs, einer zweiten Zustandsinformation eines Zielfahrzeugs und eines relativen Längsabstands ($\Delta Y$) und eines relativen Querabstands ($\Delta X$) zwischen dem aktuellen Fahrzeug und dem Zielfahrzeug, und

Bestimmen einer Totwinkelposition ($P_{dz1}$, $P_{dz2}$) und eines Aufprallbereichs ($P_{crash1}$, $P_{crash2}$) des aktuellen Fahrzeugs gemäß der ersten Zustandsinformation und der zweiten Zustandsinformation (S101);

**dadurch gekennzeichnet, dass**

einen Sicherheitsabstand ($D_s$) zwischen dem aktuellen Fahrzeug und dem Aufprallbereich gemäß der ersten Zustandsinformation und der zweiten Zustandsinformation berechnet und einen aktuellen Totwinkelgrad des aktuellen Fahrzeugs gemäß dem relativen Längsabstand ($\Delta Y$), dem relativen Seitenabstand ($\Delta X$) und dem Sicherheitsabstand (S102) bestimmt; und

Erzeugen, basierend auf einem vorbestimmten Trajektorien-Erzeugungsmodell, einer Fußgänger-Vorhersagetrajektorie, die dem gegenwärtigen Grad des toten Winkels entspricht, und Eingeben der Fußgänger-Vorhersagetrajektorie, die dem gegenwärtigen Grad des toten Winkels entspricht, in ein Trajektorien-Planungsmodul des gegenwärtigen Fahrzeugs, um so gemäß der Fußgänger-Vorhersagetrajektorie, die dem gegenwärtigen Grad des toten Winkels entspricht, das gegenwärtige Fahrzeug zu steuern, um eine Verzögerungsaktion und/oder eine Ausweichaktion auszuführen (S103).

2. Verfahren nach Anspruch 1, wobei das Erfassen einer ersten Zustandsinformation eines aktuellen Fahrzeugs und einer zweiten Zustandsinformation eines Zielfahrzeugs umfasst:

Erfassen einer aktuellen Geschwindigkeit ($v_{ego}$) und einer aktuellen geplanten Trajektorie ($T_{plan}$) des aktuellen Fahrzeugs, und Erhalten der ersten Zustandsinformation gemäß der aktuellen Geschwindigkeit und/oder der aktuellen geplanten Trajektorie des aktuellen Fahrzeugs; und

Erfassen einer aktuellen Geschwindigkeit ($v_{bus}$), einer aktuellen Beschleunigung ($a_{bus}$), einer Länge ($L_{bus}$) und einer Breite ($W_{bus}$) des Zielfahrzeugs, und Erhalten der zweiten Zustandsinformation gemäß der aktuellen Geschwindigkeit, der aktuellen Beschleunigung, der Länge und/oder der Breite des Zielfahrzeugs.

3. Verfahren nach Anspruch 2, wobei das Bestimmen einer Position des toten Winkels und eines Aufprallbereichs des aktuellen Fahrzeugs gemäß der ersten Zustandsinformation und der zweiten Zustandsinformation umfasst:

Nehmen einer Projektionsposition einer Vorderkantenmitte einer Fahrzeugkarosserie des Zielfahrzeugs auf einer vorbestimmten Karte als eine Position des toten Winkels und Projizieren der Position des toten Winkels auf die gegenwärtig geplante Trajektorie entlang einer normalen Richtung einer Straße;
Nehmen, wenn ein Projektionspunkt auf der gegenwärtig geplanten Trajektorie liegt, des Projektionspunktes als einen Aufprallpunkt, andernfalls Nehmen eines Punktes auf einer Mittellinie einer Fahrbahn, auf der sich das Zielfahrzeug gegenwärtig befindet, als den Aufprallpunkt; und
Erhalten des Aufprallbereichs durch Nehmen des Aufprallpunktes als einen Mittelpunkt und der Breite des Zielfahrzeugs als einen Durchmesser.

4. Verfahren nach Anspruch 2, wobei das Berechnen eines Sicherheitsabstands zwischen dem aktuellen Fahrzeug und dem Aufprallbereich gemäß der ersten Zustandsinformation und der zweiten Zustandsinformation umfasst:

Berechnen des Sicherheitsabstands zwischen dem aktuellen Fahrzeug und dem Aufprallbereich basierend auf einer ersten Sicherheitsabstandsformel, wenn sich das Zielfahrzeug in einem stationären Zustand befindet, wobei die erste Sicherheitsabstandsformel lautet

$$D_s = v_{ego} * t_s + \frac{v_{ego}^2}{2*a_{ego}};$$

Berechnen des Sicherheitsabstands zwischen dem aktuellen Fahrzeug und dem Aufprallbereich auf der Grundlage einer zweiten Sicherheitsabstandsformel, wenn sich das Zielfahrzeug in einem bewegten Zustand befindet, wobei die zweite Sicherheitsabstandsformel lautet:

$$D_s = v_{ego} * t_s + \frac{v_{ego}^2}{2*a_{ego}} + \frac{v_{bus}^2}{2*a_{bus}},$$

wobei $D_s$ der Sicherheitsabstand zwischen dem aktuellen Fahrzeug und dem Aufprallbereich ist, $v_{ego}$ die Geschwindigkeit des aktuellen Fahrzeugs ist, $t_s$ eine Reaktionszeit ist, $a_{ego}$ eine Schätzung der Verzögerung des aktuellen Fahrzeugs ist, $v_{bus}$ die aktuelle Geschwindigkeit des Zielfahrzeugs ist und $a_{bus}$ die aktuelle Beschleunigung des Zielfahrzeugs ist.

5. Verfahren nach Anspruch 4, wobei das Bestimmen eines aktuellen Totwinkelgrades des aktuellen Fahrzeugs gemäß dem relativen Längsabstand ($\Delta$Y), dem relativen Seitenabstand ($\Delta$X) und dem Sicherheitsabstand umfasst:

Bestimmen, wenn der Sicherheitsabstand größer als der longitudinale relative Abstand ($\Delta$Y) ist und der longitudinale relative Abstand ($\Delta$Y) größer als ein erster vorbestimmter Wert ist, des aktuellen Grades des toten Winkels als einen Vorsichtsfahrgrad;
Bestimmen, wenn der Sicherheitsabstand kleiner als der longitudinale relative Abstand ($\Delta$Y) ist, des aktuellen Grades des toten Winkels als einen Aufmerksamkeitsfahrgrad; und
Bestimmen, wenn der relative Längsabstand ($\Delta$Y) kleiner oder gleich dem ersten vorbestimmten Wert ist oder der relative Seitenabstand ($\Delta$X) größer als ein zweiter vorbestimmter Wert ist, der aktuellen Blindfleckstufe als eine Sicherheitsfahrstufe.

6. Verfahren nach Anspruch 1, wobei das Erzeugen, basierend auf einem vorbestimmten Trajektorienerzeugungsmodell, einer Fußgängervorhersagetrajektorie entsprechend der aktuellen Blindspotneigung umfasst:

Nehmen der Position des toten Winkels als einen Startpunkt der Fußgänger-Vorhersagetrajektorie, wenn der aktuelle Grad des toten Winkels ein Vorsichtsfahrgrad ist;
Verschieben des Aufprallbereichs in Richtung des Zielfahrzeugs entlang einer normalen Richtung einer Straße gemäß einer Breite des aktuellen Fahrzeugs, Abtasten des verschobenen Aufprallbereichs gemäß einer ersten vorbestimmten Abtastregel, und Nehmen eines Abtastpunkts als einen Endpunkt der Fußgänger-Vorhersagetrajektorie; und

Erzeugen, basierend auf einem vorbestimmten Polynom-Trajektorien-Erzeugungsmodell dritter Ordnung, einer Fußgänger-Vorhersagetrajektorie entsprechend der Vorsichts-Fahrstufe gemäß dem Startpunkt der Fußgänger-Vorhersagetrajektorie, dem Endpunkt der Fußgänger-Vorhersagetrajektorie, einer Geschwindigkeit eines Fußgängers am Startpunkt der Fußgänger-Vorhersagetrajektorie und einer Geschwindigkeit des Fußgängers am Endpunkt der Fußgänger-Vorhersagetrajektorie.

7.  Verfahren nach Anspruch 1, wobei das Erzeugen, basierend auf einem vorbestimmten Trajektorienerzeugungsmodell, einer Fußgängervorhersagetrajektorie entsprechend der aktuellen Blindspotneigung umfasst:

Nehmen der Position des toten Winkels als Startpunkt der Fußgänger-Vorhersagetrajektorie, wenn der aktuelle Grad des toten Winkels ein Grad der Aufmerksamkeitsfahrt ist;
Abtasten des Aufprallbereichs gemäß einer zweiten vorbestimmten Abtastregel und Nehmen eines Abtastpunkts als Endpunkt der Fußgänger-Vorhersagetrajektorie; und
Erzeugen einer Fußgänger-Vorhersagetrajektorie entsprechend dem Grad der Aufmerksamkeitsfahrt gemäß dem Startpunkt der Fußgänger-Vorhersagetrajektorie und dem Endpunkt der Fußgänger-Vorhersagetrajektorie auf der Grundlage eines vorbestimmten Polynom-Trajektorienerzeugungsmodells zweiter Ordnung.

8.  Verfahren nach Anspruch 1, wobei das Erzeugen, basierend auf einem vorbestimmten Trajektorienerzeugungsmodell, einer Fußgängervorhersagetrajektorie, die der aktuellen Stufe des toten Winkels entspricht, umfasst:
Erzeugen, wenn die aktuelle Stufe des toten Winkels eine Sicherheitsfahrstufe ist, einer Fußgängervorhersagetrajektorie, die der Sicherheitsfahrstufe als Null entspricht.

9.  Verfahren nach Anspruch 1, wobei vor dem Erfassen der ersten Zustandsinformation des aktuellen Fahrzeugs, der zweiten Zustandsinformation des Zielfahrzeugs und des relativen Längsabstands ($\Delta$Y) und des relativen Querabstands ($\Delta$X) zwischen dem aktuellen Fahrzeug und dem Zielfahrzeug das Verfahren ferner umfasst:

Erfassen von aktuellen Positionsinformationen des aktuellen Fahrzeugs und Positionsinformationen einer Markierung in einer vorbestimmten Szene; und
Berechnen eines Abstands zwischen den aktuellen Positionsinformationen und den Positionsinformationen der Markierung in der vorbestimmten Szene, und Erfassen der ersten Zustandsinformationen des aktuellen Fahrzeugs und der zweiten Zustandsinformationen des Zielfahrzeugs, wenn der Abstand kleiner als ein vorbestimmter Abstand ist.

10. Fahrzeugsicherheitskontrollvorrichtung (10), umfassend:

ein Erfassungsmodul (100), das so konfiguriert ist, dass es erste Zustandsinformationen eines aktuellen Fahrzeugs, zweite Zustandsinformationen eines Zielfahrzeugs und einen relativen Längsabstand ($\Delta$Y) und einen relativen Querabstand ($\Delta$X) zwischen dem aktuellen Fahrzeug und
dem Zielfahrzeug erfasst und eine Position des toten Winkels ($P_{dz1}$, $P_{dz2}$) und einen
Aufprallbereich ($P_{crash1}$, $P_{crash2}$) des aktuellen Fahrzeugs gemäß den ersten Zustandsinformationen und den zweiten Zustandsinformationen bestimmt;
**dadurch gekennzeichnet, dass**
ein Berechnungsmodul (200), das konfiguriert ist, um einen Sicherheitsabstand ($D_s$) zwischen dem aktuellen Fahrzeug und dem Aufprallbereich gemäß der ersten Zustandsinformation und der zweiten Zustandsinformation zu berechnen und einen aktuellen Totwinkelgrad des aktuellen Fahrzeugs gemäß dem relativen Längsabstand ($\Delta$Y), dem relativen Seitenabstand ($\Delta$X) und dem Sicherheitsabstand zu bestimmen; und
ein Steuermodul (300), das so konfiguriert ist, dass es auf der Grundlage eines vorbestimmten Trajektorienerzeugungsmodells eine Fußgängervorhersagetrajektorie erzeugt, die dem aktuellen Grad des toten Winkels entspricht, und die Fußgängervorhersagetrajektorie, die dem aktuellen Grad des toten Winkels entspricht, in ein Trajektorienplanungsmodul des aktuellen Fahrzeugs eingibt, um das aktuelle Fahrzeug gemäß der Fußgängervorhersagetrajektorie, die dem aktuellen Grad des toten Winkels entspricht, so zu steuern, dass es eine Verzögerungsaktion und/oder eine Ausweichaktion ausführt.

11. Vorrichtung nach Anspruch 10, wobei das Erfassungsmodul umfasst:

eine erste Erfassungseinheit, die konfiguriert ist, um eine aktuelle Geschwindigkeit ($v_{ego}$) und
eine aktuelle geplante Trajektorie ($T_{plan}$) des aktuellen Fahrzeugs zu erfassen und die erste Zustandsinformation gemäß der aktuellen Geschwindigkeit und/oder der aktuellen geplanten Trajektorie des aktuellen Fahrzeugs zu erhalten; und
eine zweite Erfassungseinheit, die konfiguriert ist, um eine aktuelle Geschwindigkeit ($v_{bus}$), eine aktuelle Beschleunigung ($a_{bus}$), eine Länge ($L_{bus}$) und eine Breite ($W_{bus}$) des Zielfahrzeugs zu erfassen und die zweite Zustandsinformation gemäß der aktuellen Geschwindigkeit, der aktuellen Beschleunigung, der Länge und/oder der Breite des Zielfahrzeugs zu erhalten.

12. Vorrichtung nach Anspruch 11, wobei das Erfassungsmodul umfasst:

eine Projektionseinheit, die so konfiguriert ist, dass sie eine Projektionsposition einer Vorderkantenmitte einer Fahrzeugkarosserie des Zielfahrzeugs auf einer vorbestimmten Karte als eine Position des toten Winkels nimmt und die Position des toten Winkels auf die aktuelle geplante Trajektorie entlang einer normalen Richtung einer Straße projiziert;
eine Beurteilungseinheit, die so konfiguriert ist, dass sie, wenn sich ein Projektionspunkt auf der aktuell geplanten Trajektorie befindet, den Projektionspunkt als Aufprallpunkt nimmt, andernfalls einen Punkt auf einer Mittellinie einer Fahrbahn, auf der sich das Zielfahrzeug aktuell befindet, als Aufprallpunkt nimmt; und
eine dritte Erfassungseinheit, die so konfiguriert ist, dass sie den Aufprallbereich erhält, indem sie den Aufprallpunkt als Zentrum und die Breite des Zielfahrzeugs als Durchmesser nimmt.

13. Vorrichtung nach Anspruch 11, wobei das Berechnungsmodul Folgendes umfasst:

eine erste Berechnungseinheit, die so konfiguriert ist, dass sie den Sicherheitsabstand zwischen dem aktuellen Fahrzeug und dem Aufprallbereich basierend auf einer ersten Sicherheitsabstandsformel berechnet, wenn sich das Zielfahrzeug in einem stationären Zustand befindet, wobei die erste Sicherheitsabstandsformel lautet:

$$D_s = v_{ego} * t_s + \frac{v_{ego}^2}{2*a_{ego}};$$

eine zweite Berechnungseinheit, die konfiguriert ist, um den Sicherheitsabstand zwischen dem aktuellen Fahrzeug und dem Aufprallbereich basierend auf einer zweiten Sicherheitsabstandsformel zu berechnen, wenn sich das Zielfahrzeug in einem bewegten Zustand befindet, wobei die zweite Sicherheitsabstandsformel lautet

$$D_s = v_{ego} * t_s + \frac{v_{ego}^2}{2*a_{ego}} + \frac{v_{bus}^2}{2*a_{bus}},$$

wobei $D_s$ der Sicherheitsabstand zwischen dem aktuellen Fahrzeug und dem Aufprallbereich ist, $v_{ego}$ die Geschwindigkeit des aktuellen Fahrzeugs ist, $t_s$ eine Reaktionszeit ist, $a_{ego}$ eine Abschätzung der Verzögerung des aktuellen Fahrzeugs ist, $v_{bus}$ die aktuelle Geschwindigkeit des Zielfahrzeugs ist und $a_{bus}$ die aktuelle Beschleunigung des Zielfahrzeugs ist.

14. Vorrichtung nach Anspruch 13, wobei das Berechnungsmodul umfasst:

eine erste Bestimmungseinheit, die so konfiguriert ist, dass sie, wenn der Sicherheitsabstand größer als der longitudinale relative Abstand ($\Delta Y$) ist und der longitudinale relative Abstand ($\Delta Y$) größer als ein erster vorbestimmter Wert ist, den aktuellen Grad des toten Winkels als einen Vorsichtsfahrgrad bestimmt;
eine zweite Bestimmungseinheit, die so konfiguriert ist, dass sie, wenn der Sicherheitsabstand kleiner als der longitudinale relative Abstand ($\Delta Y$) ist, den aktuellen Grad des toten Winkels als einen Aufmerksamkeitsfahrgrad bestimmt; und
eine dritte Bestimmungseinheit, die so konfiguriert ist, dass sie, wenn der longitudinale relative Abstand ($\Delta Y$) kleiner oder gleich dem ersten vorbestimmten Wert ist oder der laterale relative Abstand ($\Delta X$) größer als ein zweiter vorbestimmter Wert ist, den aktuellen Grad des toten Winkels als eine Sicherheitsfahrstufe bestimmt.

15. Vorrichtung nach Anspruch 10, wobei das Steuermodul umfasst:

eine vierte Bestimmungseinheit, die so konfiguriert ist, dass sie die Position des toten Winkels als einen Startpunkt der Fußgänger-Vorhersagetrajektorie nimmt, wenn die aktuelle Neigung des toten Winkels eine Vorsichts-Fahrneigung ist;
eine erste Abtasteinheit, die so konfiguriert ist, dass sie den Aufprallbereich in Richtung des Zielfahrzeugs entlang einer normalen Richtung einer Straße entsprechend einer Breite des aktuellen Fahrzeugs verschiebt, den verschobenen Aufprallbereich entsprechend einer ersten vorbestimmten Abtastregel abtastet und einen Abtastpunkt als einen Endpunkt der Fußgänger-Vorhersagetrajektorie nimmt; und

eine erste Erzeugungseinheit, die so konfiguriert ist, dass sie auf der Grundlage eines vorbestimmten polynomialen Trajektorienerzeugungsmodells dritter Ordnung eine Fußgänger-Vorhersagetrajektorie erzeugt, die der Vorsichtsfahrstufe gemäß dem Startpunkt der Fußgänger-Vorhersagetrajektorie, dem Endpunkt der Fußgänger-Vorhersagetrajektorie, einer Geschwindigkeit eines Fußgängers am Startpunkt der Fußgänger-Vorhersagetrajektorie und einer Geschwindigkeit des Fußgängers am Endpunkt der Fußgänger-Vorhersagetrajektorie entspricht.

16. Vorrichtung nach Anspruch 10, wobei das Steuermodul umfasst:

eine fünfte Bestimmungseinheit, die so konfiguriert ist, dass sie die Position des toten Winkels als Startpunkt der Fußgänger-Vorhersagetrajektorie nimmt, wenn die aktuelle Neigung des toten Winkels eine Aufmerksamkeits-Fahrneigung ist;
eine zweite Abtasteinheit, die so konfiguriert ist, dass sie den Unfallbereich gemäß einer zweiten vorbestimmten Abtastregel abtastet und einen Abtastpunkt als Endpunkt der Fußgänger-Vorhersagetrajektorie nimmt; und
eine zweite Erzeugungseinheit, die so konfiguriert ist, dass sie auf der Grundlage eines vorbestimmten polynomialen Trajektorienerzeugungsmodells zweiter Ordnung eine Fußgänger-Vorhersagetrajektorie erzeugt, die der Aufmerksamkeits-Fahrstufe gemäß dem Startpunkt der Fußgänger-Vorhersagetrajektorie und dem Endpunkt der Fußgänger-Vorhersagetrajektorie entspricht.

17. Vorrichtung nach Anspruch 10, wobei das Steuermodul umfasst:
eine dritte Erzeugungseinheit, die so konfiguriert ist, dass sie, wenn der aktuelle Grad des toten Winkels ein Sicherheitsfahrgrad ist, eine Fußgänger-Vorhersagetrajektorie erzeugt, die dem Sicherheitsfahrgrad als Null entspricht.

18. Vorrichtung nach Anspruch 10, wobei das Erfassungsmodul vor dem Erfassen der ersten Zustandsinformation des aktuellen Fahrzeugs, der zweiten Zustandsinformation des Zielfahrzeugs und des relativen Längsabstands ($\Delta Y$) und des relativen Querabstands ($\Delta X$) zwischen dem aktuellen Fahrzeug und dem Zielfahrzeug ferner umfasst:

eine vierte Erfassungseinheit, die so konfiguriert ist, dass sie aktuelle Positionsinformationen des aktuellen Fahrzeugs und Positionsinformationen einer Markierung in einer vorbestimmten Szene erfasst; und
eine dritte Berechnungseinheit, die so konfiguriert ist, dass sie einen Abstand zwischen den aktuellen Positionsinformationen und den Positionsinformationen der Markierung in der vorbestimmten Szene berechnet und die ersten Zustandsinformationen des aktuellen Fahrzeugs und die zweiten Zustandsinformationen des Zielfahrzeugs erfasst, wenn der Abstand kleiner als ein vorbestimmter Abstand ist.

19. Fahrzeug, umfassend eine Fahrzeugsicherheitssteuerungsvorrichtung nach einem der Ansprüche 10 bis 18: einen Speicher, einen Prozessor und ein Computerprogramm, das in dem Speicher gespeichert ist und von dem Prozessor ausgeführt werden kann, wobei der Prozessor das Programm ausführt, um das Fahrzeugsicherheitssteuerungsverfahren nach einem der Ansprüche 1 bis 9 zu implementieren.

20. Computerlesbares Speichermedium mit einem darauf gespeicherten Computerprogramm, wobei das Programm von einem Prozessor ausgeführt wird, um das FahrzeugsicherheitsSteuerungsverfahren nach einem der Ansprüche 1 bis 9 zu implementieren.

## Revendications

1. Méthode de contrôle de la sécurité d'un véhicule, comprenant les étapes suivantes :

acquisition d'informations sur le premier état d'un véhicule actuel, d'informations sur le deuxième état d'un véhicule cible, et d'une distance relative longitudinale ($\Delta Y$) et d'une distance relative latérale ($\Delta X$) entre le véhicule actuel et le véhicule cible, et détermination d'une position d'angle mort ($P_{dz1}$, $P_{dz2}$) et d'une région d'accident ($P_{crash1}$, $P_{crash2}$) du véhicule actuel en fonction des informations sur le premier état et des informations sur le deuxième état (S101) ;
**caractérisé en ce que**,

calculant une distance de sécurité ($D_s$) entre le véhicule actuel et la zone de collision en fonction des premières informations d'état et des secondes informations d'état, et déterminant un niveau actuel de l'angle mort du véhicule actuel en fonction de la distance relative longitudinale ($\triangle Y$), de la distance relative latérale ($\triangle X$) et de la distance de sécurité (S102) ; et

générer, sur la base d'un modèle de génération de trajectoire prédéterminé, une trajectoire de prédiction de piéton correspondant à la pente de l'angle mort actuel, et introduire la trajectoire de prédiction de piéton correspondant à la pente de l'angle mort actuel dans un module de planification de trajectoire du véhicule actuel, de manière à commander, en fonction de la trajectoire de prédiction de piéton correspondant à la pente de l'angle mort actuel, l'exécution par le véhicule actuel d'une action de décélération et/ou d'une action d'évitement (S103).

2. Méthode selon la revendication 1, dans laquelle l'acquisition de la première information d'état d'un véhicule actuel et de la deuxième information d'état d'un véhicule cible comprend :

l'acquisition d'une vitesse actuelle ($v_{ego}$) et d'une trajectoire planifiée actuelle ($T_{plan}$) du véhicule actuel, et l'obtention des premières informations d'état en fonction de la vitesse actuelle et/ou de la trajectoire planifiée actuelle du véhicule actuel ; et

l'acquisition d'une vitesse actuelle ($v_{bus}$), d'une accélération actuelle ($a_{bus}$), d'une longueur ($L_{bus}$) et d'une largeur ($W_{bus}$) du véhicule cible, et l'obtention des deuxièmes informations d'état en fonction de la vitesse actuelle, de l'accélération actuelle, de la longueur, et/ou de la largeur du véhicule cible.

3. Méthode selon la revendication 2, dans laquelle la détermination d'une position d'angle mort et d'une zone de collision du véhicule actuel en fonction des premières informations d'état et des secondes informations d'état comprend :

prendre une position de projection du centre du bord avant de la carrosserie du véhicule cible sur une carte prédéterminée comme position de l'angle mort, et projeter la position de l'angle mort sur la trajectoire planifiée actuelle le long d'une direction normale d'une route ;

prendre, si un point de projection est situé sur la trajectoire planifiée actuelle, le point de projection comme point de collision, sinon, prendre un point sur une ligne centrale d'une voie où le véhicule cible est actuellement situé comme point de collision ; et

obtenir la région de collision en prenant le point de collision comme un centre et la largeur du véhicule cible comme un diamètre.

4. Méthode selon la revendication 2, dans laquelle le calcul d'une distance de sécurité entre le véhicule actuel et la zone d'accident en fonction des informations de premier état et des informations de deuxième état comprend :

le calcul de la distance de sécurité entre le véhicule actuel et la zone d'accident sur la base d'une première formule de distance de sécurité lorsque le véhicule cible est dans un état stationnaire, la première formule de distance de sécurité étant :

$$D_s = v_{ego} * t_s + \frac{v_{ego}^2}{2 * a_{ego}};$$

calculer la distance de sécurité entre le véhicule actuel et la zone de collision sur la base d'une deuxième formule de distance de sécurité lorsque le véhicule cible est en mouvement, la deuxième formule de distance de sécurité étant :

$$D_s = v_{ego} * t_s + \frac{v_{ego}^2}{2 * a_{ego}} + \frac{v_{bus}^2}{2 * a_{bus}},$$

dans laquelle $D_s$ est la distance de sécurité entre le véhicule actuel et la zone de collision, $v_{ego}$ est la vitesse du véhicule actuel, $t_s$ est un temps de réponse, $a_{ego}$ est une estimation de la décélération du véhicule actuel, $v_{bus}$ est la vitesse actuelle du véhicule cible, et $a_{bus}$ est l'accélération actuelle du véhicule cible.

5. Méthode selon la revendication 4, dans laquelle la détermination d'un niveau actuel de l'angle mort du véhicule actuel en fonction de la distance relative longitudinale ($\triangle Y$), de la distance relative latérale ($\triangle X$) et de la distance de sécurité comprend :

déterminer, lorsque la distance de sécurité est supérieure à la distance relative longitudinale ($\Delta Y$) et que la distance relative longitudinale ($\Delta Y$) est supérieure à une première valeur prédéterminée, le niveau actuel de l'angle mort comme étant un niveau de conduite prudent ;
déterminer, lorsque la distance de sécurité est inférieure à la distance relative longitudinale ($\Delta Y$), le niveau actuel de l'angle mort comme étant un niveau de conduite attentif ; et
déterminer, lorsque la distance relative longitudinale ($\Delta Y$) est inférieure ou égale à la première valeur prédéterminée ou que la distance relative latérale ($\Delta X$) est supérieure à une deuxième valeur prédéterminée, le niveau de l'angle mort actuel en tant que niveau de conduite de sécurité.

6. Méthode selon la revendication 1, dans laquelle la génération, sur la base d'un modèle de génération de trajectoire prédéterminé, d'une trajectoire de prédiction piétonne correspondant à la pente actuelle de l'angle mort comprend :

prendre la position de l'angle mort comme point de départ de la trajectoire de prédiction piétonne lorsque la pente de l'angle mort actuel est une pente de conduite prudente ;
translater la zone de collision vers le véhicule cible le long d'une direction normale d'une route en fonction d'une largeur du véhicule actuel, échantillonner la zone de collision translatée conformément à une première règle d'échantillonnage prédéterminée, et prendre un point d'échantillonnage comme point final de la trajectoire de prédiction piétonne ; et
générer, sur la base d'un modèle prédéterminé de génération de trajectoire polynomiale du troisième ordre, une trajectoire de prédiction de piéton correspondant à la pente de conduite de prudence en fonction du point de départ de la trajectoire de prédiction de piéton, du point d'arrivée de la trajectoire de prédiction de piéton, de la vitesse d'un piéton au point de départ de la trajectoire de prédiction de piéton et de la vitesse du piéton au point d'arrivée de la trajectoire de prédiction de piéton.

7. Méthode selon la revendication 1, dans laquelle la génération, sur la base d'un modèle de génération de trajectoire prédéterminé, d'une trajectoire de prédiction de piéton correspondant à la pente actuelle de l'angle mort comprend :

prendre la position de l'angle mort comme point de départ de la trajectoire de prédiction piétonne lorsque l'intensité de l'angle mort actuel est une intensité de conduite attentive ;
échantillonner la zone de collision selon une deuxième règle d'échantillonnage prédéterminée, et prendre un point d'échantillonnage comme point final de la trajectoire de prédiction piétonne ; et
générer, sur la base d'un modèle prédéterminé de génération de trajectoire polynomiale de second ordre, une trajectoire de prédiction piétonne correspondant à l'intensité de conduite attentive en fonction du point de départ de la trajectoire de prédiction piétonne et du point final de la trajectoire de prédiction piétonne.

8. Méthode selon la revendication 1, dans laquelle la génération, sur la base d'un modèle de génération de trajectoire prédéterminé, d'une trajectoire de prédiction de piéton correspondant au niveau actuel de l'angle mort comprend :
la génération, lorsque le niveau actuel de l'angle mort est un niveau de conduite de sécurité, d'une trajectoire de prédiction de piéton correspondant au niveau de conduite de sécurité comme nulle.

9. Méthode selon la revendication 1, dans laquelle avant d'acquérir la première information d'état du véhicule actuel, la deuxième information d'état du véhicule cible, et la distance relative longitudinale ($\Delta Y$) et la distance relative latérale ($\Delta X$) entre le véhicule actuel et le véhicule cible, la méthode comprend en outre :

l'acquisition d'informations sur la position actuelle du véhicule actuel et d'informations sur la position d'un marqueur dans une scène prédéterminée ; et
le calcul d'une distance entre les informations sur la position actuelle et les informations sur la position du marqueur dans la scène prédéterminée, et l'acquisition des premières informations sur l'état du véhicule actuel et des secondes informations sur l'état du véhicule cible lorsque la distance est inférieure à une distance prédéterminée.

10. Appareil de contrôle de la sécurité d'un véhicule (10), comprenant :

un module d'acquisition (100), configuré pour acquérir des informations de premier état d'un véhicule actuel, des informations de second état d'un véhicule cible, et une distance relative longitudinale ($\Delta Y$) et une distance relative latérale ($\Delta X$) entre le véhicule actuel et le véhicule

cible, et déterminer une position d'angle mort ($P_{dz1}$, $P_{dz2}$) et une région de collision ($P_{crash1}$, $P_{crash2}$) du véhicule actuel en fonction des informations de premier état et des informations de second état ;

**caractérisé en ce que**

un module de calcul (200), configuré pour calculer une distance de sécurité ($D_s$) entre le véhicule actuel et la zone d'accident en fonction des premières informations d'état et des secondes informations d'état, et déterminer un niveau d'angle mort actuel du véhicule actuel en fonction de la distance relative longitudinale ($\Delta Y$), de la distance relative latérale ($\Delta X$) et de la distance de sécurité ; et

un module de commande (300) configuré pour générer, sur la base d'un modèle de génération de trajectoire prédéterminé, une trajectoire de prédiction de piéton correspondant à la pente de l'angle mort actuel, et pour entrer la trajectoire de prédiction de piéton correspondant à la pente de l'angle mort actuel dans un module de planification de trajectoire du véhicule actuel, de manière à commander, en fonction de la trajectoire de prédiction de piéton correspondant à la pente de l'angle mort actuel, le véhicule actuel pour exécuter une action de décélération et/ou une action d'évitement.

**11.** Appareil selon la revendication 10, dans lequel le module d'acquisition comprend :

une première unité d'acquisition, configurée pour acquérir une vitesse courante ($v_{ego}$) et une trajectoire planifiée courante ($T_{plan}$) du véhicule courant, et obtenir la première information d'état en fonction de la vitesse courante et/ou de la trajectoire planifiée courante du véhicule courant ; et

une deuxième unité d'acquisition, configurée pour acquérir une vitesse actuelle ($v_{bus}$), une accélération actuelle ($a_{bus}$), une longueur ($L_{bus}$) et une largeur ($W_{bus}$) du véhicule cible, et obtenir les deuxièmes informations d'état en fonction de la vitesse actuelle, de l'accélération actuelle, de la longueur et/ou de la largeur du véhicule cible.

**12.** Appareil selon la revendication 11, dans lequel le module d'acquisition comprend :

une unité de projection, configurée pour prendre une position de projection d'un centre de bord d'attaque d'un corps de véhicule du véhicule cible sur une carte prédéterminée comme une position d'angle mort, et projeter la position d'angle mort sur la trajectoire planifiée actuelle le long d'une direction normale d'une route ;

une unité de jugement, configurée pour prendre, si un point de projection est situé sur la trajectoire planifiée actuelle, le point de projection comme point de collision, sinon, prendre un point sur une ligne centrale d'une voie où le véhicule cible est actuellement situé comme point de collision ; et

une troisième unité d'acquisition, configurée pour obtenir la région de collision en prenant le point de collision comme un centre et la largeur du véhicule cible comme un diamètre.

**13.** Appareil selon la revendication 11, dans lequel le module de calcul comprend :

une première unité de calcul, configurée pour calculer la distance de sécurité entre le véhicule actuel et la zone de collision sur la base d'une première formule de distance de sécurité lorsque le véhicule cible est dans un état stationnaire, la première formule de distance de sécurité étant :

$$D_s = v_{ego} * t_s + \frac{v_{ego}^2}{2*a_{ego}};$$

une deuxième unité de calcul, configurée pour calculer la distance de sécurité entre le véhicule actuel et la zone de collision sur la base d'une deuxième formule de distance de sécurité lorsque le véhicule cible est en mouvement, la deuxième formule de distance de sécurité étant :

$$D_s = v_{ego} * t_s + \frac{v_{ego}^2}{2*a_{ego}} + \frac{v_{bus}^2}{2*a_{bus}},$$

dans laquelle $D_s$ est la distance de sécurité entre le véhicule actuel et la zone de collision, $v_{ego}$ est la vitesse du véhicule actuel, $t_s$ est un temps de réponse, $a_{ego}$ est une estimation de la décélération du véhicule actuel, $v_{bus}$ est la vitesse actuelle du véhicule cible, et $a_{bus}$ est l'accélération actuelle du véhicule cible.

**14.** Appareil selon la revendication 13, dans lequel le module de calcul comprend :

une première unité de détermination, configurée pour déterminer, lorsque la distance de sécurité est supérieure à la distance relative longitudinale ($\Delta Y$) et que la distance relative longitudinale ($\Delta Y$) est supérieure à une première valeur prédéterminée, le niveau actuel de l'angle mort comme un niveau de conduite prudent ;

une deuxième unité de détermination, configurée pour déterminer, lorsque la distance de sécurité est inférieure à la distance relative longitudinale ($\Delta Y$), le niveau actuel de l'angle mort comme un niveau de conduite attentif ; et

une troisième unité de détermination, configurée pour déterminer, lorsque la distance relative longitudinale ($\Delta Y$) est inférieure ou égale à la première valeur prédéterminée ou que la distance relative latérale ($\Delta X$) est supérieure à une deuxième valeur prédéterminée, le niveau actuel de l'angle mort en tant que niveau de conduite de sécurité.

15. Appareil selon la revendication 10, dans lequel le module de commande comprend :

une quatrième unité de détermination, configurée pour prendre la position de l'angle mort comme point de départ de la trajectoire de prédiction piétonne lorsque la pente actuelle de l'angle mort est une pente de conduite prudente ;

une première unité d'échantillonnage, configurée pour déplacer la zone de collision vers le véhicule cible le long d'une direction normale d'une route en fonction d'une largeur du véhicule actuel, échantillonner la zone de collision déplacée selon une première règle d'échantillonnage prédéterminée, et prendre un point d'échantillonnage comme point de fin de la trajectoire de prédiction piétonne ; et

une première unité de génération, configurée pour générer, sur la base d'un modèle de génération de trajectoire polynomiale du troisième ordre prédéterminé, une trajectoire de prédiction de piéton correspondant à la pente de conduite de prudence en fonction du point de départ de la trajectoire de prédiction de piéton, du point d'arrivée de la trajectoire de prédiction de piéton, de la vitesse d'un piéton au point de départ de la trajectoire de prédiction de piéton et de la vitesse du piéton au point d'arrivée de la trajectoire de prédiction de piéton.

16. Appareil selon la revendication 10, dans lequel le module de commande comprend :

une cinquième unité de détermination, configurée pour prendre la position de l'angle mort comme point de départ de la trajectoire de prédiction piétonne lorsque la pente actuelle de l'angle mort est une pente de conduite attentive ;

une deuxième unité d'échantillonnage, configurée pour échantillonner la zone d'accident selon une deuxième règle d'échantillonnage prédéterminée, et prendre un point d'échantillonnage comme point final de la trajectoire de prédiction piétonne ; et

une deuxième unité de génération, configurée pour générer, sur la base d'un modèle de génération de trajectoire polynomiale de second ordre prédéterminé, une trajectoire de prédiction de piéton correspondant à la pente de conduite attentionnée en fonction du point de départ de la trajectoire de prédiction de piéton et du point d'arrivée de la trajectoire de prédiction de piéton.

17. Appareil selon la revendication 10, dans lequel le module de commande comprend :
une troisième unité de génération, configurée pour générer, lorsque l'intensité de l'angle mort actuel est une intensité de conduite de sécurité, une trajectoire de prédiction piétonne correspondant à l'intensité de conduite de sécurité comme nulle.

18. Appareil selon la revendication 10, dans lequel avant d'acquérir la première information d'état du véhicule actuel, la deuxième information d'état du véhicule cible, et la distance relative longitudinale ($\Delta Y$) et la distance relative latérale ($\Delta X$) entre le véhicule actuel et le véhicule cible, le module d'acquisition comprend en outre :

une quatrième unité d'acquisition, configurée pour acquérir les informations de position actuelle du véhicule actuel et les informations de position d'un marqueur dans une scène prédéterminée ; et

une troisième unité de calcul, configurée pour calculer une distance entre les informations de position actuelle et les informations de position du marqueur dans la scène prédéterminée, et acquérir les premières informations d'état du véhicule actuel et les secondes informations d'état du véhicule cible lorsque la distance est inférieure à une distance prédéterminée.

19. Véhicule comprenant un appareil de contrôle de la sécurité du véhicule selon l'une des revendications 10 à 18 : une mémoire, un processeur et un programme d'ordinateur stocké sur la mémoire et exécutable sur le processeur, le processeur exécutant le programme pour mettre en œuvre la méthode de contrôle de la sécurité du véhicule selon l'une des revendications 1 à 9.

20. Support de stockage lisible par ordinateur, comprenant un programme d'ordinateur stocké sur celui-ci, dans lequel le programme est exécuté par un processeur pour mettre en œuvre la méthode de contrôle de la sécurité du véhicule selon l'une des revendications 1 à 9.

Acquire first state information of a current vehicle, second state information of a target vehicle, and a vertical relative distance and a horizontal relative distance between the current vehicle and the target vehicle, and determine a blind spot position and a crash region of the current vehicle according to the first state information and the second state information

S101

Calculate a safety distance between the current vehicle and the crash region according to the first state information and the second state information, and determine a current blind spot grade of the current vehicle according to the vertical relative distance, the horizontal relative distance, and the safety distance

S102

Generate, based on a predetermined trajectory generation model, a pedestrian prediction trajectory corresponding to the current blind spot grade, and input the pedestrian prediction trajectory corresponding to the current blind spot grade to a trajectory planning module of the current vehicle so as to control, according to the pedestrian prediction trajectory corresponding to the current blind spot grade, the current vehicle to execute a deceleration action and/or an avoidance action

S103

Fig. 1

Fig. 2

Fig. 3

Possible crash region 1

Prediction trajectory

Possible crash region 2

Prediction trajectory

Planned trajectory

Fig. 4

100 200 300 10

Acquisition module | Calculation module | Control module

Vehicle safety control apparatus

Fig. 5

603 601

Communication interface | Memory

602

Processor

Electronic device

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220161787 A1